# EUROPEAN PATENT APPLICATION

(11) **EP 4 779 963 A1**
(43) Date of publication of application: **22.07.2026**
(21) Application number: 25200752.1
(22) Date of filing: 08.09.2025
(51) Int. Cl.: H04N 1/00, G10K 11/16, G10K 11/36

(54) **DOCUMENT PROCESSING APPARATUS, IMAGE FORMING APPARATUS, AND IMAGE FORMING SYSTEM**

(30) Priority: 17.01.2025 JP 2025007215
(71) Applicant: ETRIA Co., Ltd., Yokohama Kanagawa (JP)
(72) Inventor: Yamada, Jun, Kanagawa, 220-0011 (JP)
(74) Representative: SSM Sandmair

(57) **Abstract**

A document processing apparatus includes a tray (53) on which a document is to be placed; a conveyer configured to convey the document from the tray (53); a reading unit (151, 95) configured to read an image of the document while the document is conveyed by the conveyer (B, C, D, E, F, G, H); an acquisition unit (1801) configured to acquire processing information including at least one of a setting for conveying the document by the conveyer (B, C, D, E, F, G, H) and a setting for reading the document by the reading unit (151, 95); and an estimation unit (1804) configured to estimate, based on the processing information acquired by the acquisition unit (1801), sound pleasantness which a person feels for sound produced in conveyance or reading of the document in a case where the document is conveyed or read.

## Description

### BACKGROUND

### Technical Field

The present disclosure relates to a document processing apparatus, an image forming apparatus, and an image forming system.

### Related Art

Equipment including a document processing apparatus is disposed in various environments. When the equipment is disposed in a relatively quiet environment such as an office, sound produced by the equipment is desirably considered.

Japanese Unexamined Patent Application Publication No. 2014-221536 has proposed a technique of acquiring a noise value of sound produced in an operation mode by an image forming apparatus including an image reading unit, and changing the operation mode to decrease the noise value.

However, the technique proposed in Japanese Unexamined Patent Application Publication No. 2014-221536 is for changing the operation mode to reduce the noise value (dB) and does not take into account the type of the produced sound. That is, even though the produced sound has the same noise value, the impression which people feel for the sound differs depending on the type of the sound. In other words, the technique in the related art does not take into account the viewpoint of sound pleasantness which people feel for the sound.

### SUMMARY

The present disclosure described herein provides a document processing apparatus including a tray, a conveyer, a reading unit, an acquisition unit, and an estimation unit. On the tray, a document is to be placed. The conveyer conveys the document from the tray. The reading unit reads an image of the document while the document is conveyed by the conveyer. The acquisition unit acquires processing information including at least one of a setting for conveying the document by the conveyer and a setting for reading the document by the reading unit. The estimation unit estimates, based on the processing information acquired by the acquisition unit, sound pleasantness which a person feels for sound produced in conveyance or reading of the document in a case where the document is conveyed or read.

The present disclosure described herein provides an image forming apparatus including an acquisition unit and an estimation unit. The acquisition unit connects to a document processing apparatus via an interface to enable communication with the document processing apparatus. The document processing apparatus includes a tray on which a document is to be placed, a conveyer to convey the document from the tray, and a reading unit to read an image on the document while the document is conveyed by the conveyer. The acquisition unit acquires processing information including at least one of a setting for conveying the document by the conveyer and a setting for reading the document by the reading unit. The estimation unit estimates, based on the processing information acquired by the acquisition unit, sound pleasantness which a person feels for sound produced in conveyance or reading of the document in a case where the document is conveyed or read.

The present disclosure described herein provides an image forming system including a document processing apparatus and an image forming apparatus. The document processing apparatus includes a tray, a conveyer, a reading unit, and an interface. On the tray, a document is to be placed. The conveyer conveys the document from the tray. The reading unit reads an image of the document while the document is conveyed by the conveyer. The interface connects to the image forming apparatus to enable communication with the image forming apparatus. The image forming apparatus includes a driving mechanism. The driving mechanism performs driving to form an image. The document processing apparatus further includes an acquisition unit, an estimation unit, and a communication control unit. The acquisition unit acquires processing information including at least one of a setting for conveying the document by the conveyer and a setting for reading the document by the reading unit. The estimation unit estimates, based on the processing information acquired by the acquisition unit, sound pleasantness which a person feels for sound produced in conveyance or reading of the document in a case where the document is conveyed or read. The communication control unit transmits information based on an estimation result of the sound pleasantness to the image forming apparatus. The image forming apparatus changes control of the driving mechanism, based on the received information.

According to one aspect of the present disclosure, a document processing apparatus, an image forming apparatus, and an image forming system are provided which take into account sound pleasantness which people feel for sound produced thereby to reduce a degree of unpleasantness caused in people by the sound and increase comfort in a surrounding environment thereof.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic configuration diagram of a copier according to an embodiment;
FIG. 2 is a partial view of a part of an internal configuration of an image forming apparatus according to an embodiment;
FIG. 3 is a partial enlarged view of a part of a tandem section according to an embodiment;
FIG. 4 is a perspective view of a scanner and an automatic document feeder (ADF) of the copier according to an embodiment;
FIG. 5 is an enlarged view of components of the ADF and an upper part of the scanner according to an embodiment;
FIG. 6 is a diagram illustrating an example of a configuration of a copier according to a first embodiment;
FIG. 7 is a diagram for describing estimation of sound pleasantness and productivity by a trained model according to the first embodiment;
FIG. 8 is a diagram illustrating an example of a functional configuration of a document processing system according to the first embodiment;
FIG. 9 is a flowchart illustrating an example of a procedure of document processing performed by a controller of the ADF according to the first embodiment;
FIGs. 10A to 10C are diagrams each illustrating an example of a screen related to the document processing of the ADF according to the first embodiment;
FIG. 11 is a diagram for describing estimation of sound pleasantness and productivity performed for each document processing information by an estimation unit according to the first embodiment;
FIG. 12 is a flowchart illustrating an example of a procedure of document processing performed by a controller of the ADF according to a modification of the first embodiment;
FIG. 13 is a diagram for describing a training phase in which an information processing apparatus according to the first embodiment generates the trained model and installs the trained model in the ADF;
FIG. 14 is a flowchart illustrating a procedure of collecting information for use in generation of labeled training data according to the first embodiment;
FIG. 15 is a diagram illustrating a structure of the labeled training data according to the first embodiment;
FIG. 16 is a flowchart illustrating a trained model generation procedure in the information processing apparatus according to the first embodiment;
FIG. 17 is a diagram illustrating an example of a configuration of a copier according to a second embodiment; and
FIG. 18 is a diagram illustrating an example of configurations of a copier and a cloud server according to a third embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A document processing apparatus, an image forming apparatus, a trained model generation apparatus, and an image forming system according to embodiments of the present disclosure will be described in detail below with reference to the accompanying drawings.

### First Embodiment

A copier according to the present embodiment to be used may be, for example, a full-color digital multifunction peripheral/product/printer (MFP) that forms a color image by electrophotography.

Embodiments using an electrophotographic copier (hereinafter, simply referred to as a copier) will be described below. A description is now given of the basic configuration of the copier according to the embodiments.

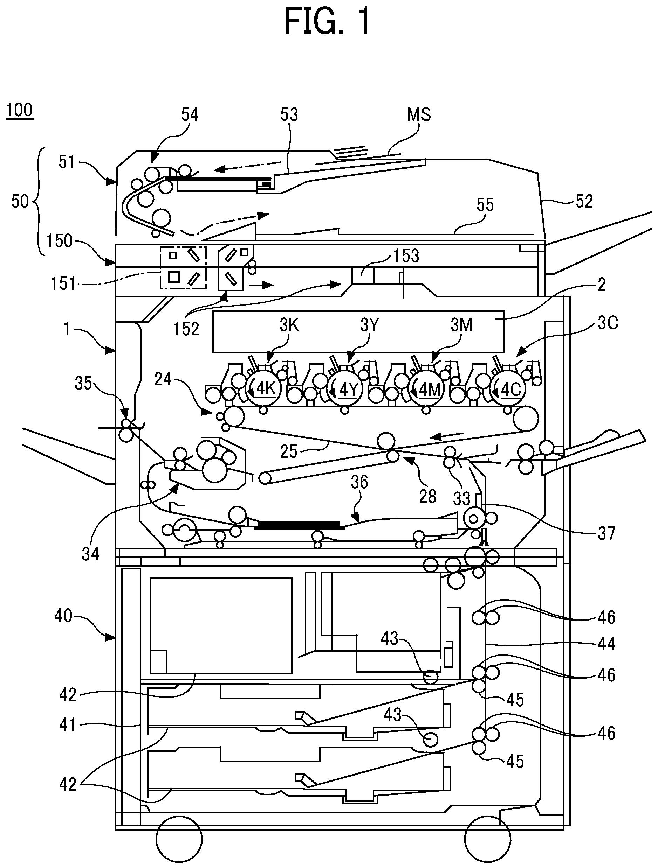

FIG. 1 is a schematic configuration diagram of a copier according to an embodiment. In the example in FIG. 1, a copier 100 includes an image forming apparatus 1, a sheet feeding apparatus 40, and an image reading system 50. The image forming apparatus 1 is an example of an image forming apparatus in the present disclosure. The image reading system 50 includes a scanner 150, as an image reading apparatus, fixed on the image forming apparatus 1, and a document processing apparatus (hereinafter, referred to as an ADF) 51 supported by the scanner 150.

The sheet feeding apparatus 40 includes a sheet bank 41, two sheet trays 42 disposed in multistage in the sheet bank 41, sheet feed rollers 43 each of which picks up and feeds a recording sheet from a corresponding one of the sheet trays 42, and sheet separation rollers 45 each of which separates from each other multiple recording sheets fed by the sheet feed rollers 43. The sheet feeding apparatus 40 further includes multiple conveyance roller pairs 46 each of which conveys the recording sheet in a sheet conveyance path 37, which is a conveyance path in the image forming apparatus 1.

Each of the sheet trays 42 accommodates therein multiple recording sheets stacked in a form of a sheet bundle. Each of the sheet feed rollers 43 is pressed against the uppermost recording sheet of the sheet bundle. As each of the sheet feed rollers 43 rotates, the uppermost recording sheet of the sheet bundle is fed from the corresponding one of the sheet trays 42.

The conveyance roller pairs 46 are disposed near the sheet trays 42. Each of the conveyance roller pairs 46 includes a first conveyance roller and a second conveyance roller disposed on a side of (in FIG. 1, on the right side of) the first conveyance roller. The first conveyance roller and the second conveyance roller of each of the conveyance roller pairs 46 are in contact with each other to form a conveyance nip region.

The sheet separation roller 45 is disposed below the first conveyance roller of each of the conveyance roller pairs 46 and is in contact with the first conveyance roller from below to form a separation conveyance nip region.

A recording sheet, which is fed from each of the sheet trays 42 as the corresponding sheet feed roller 43 is driven to rotate, enters the separation conveyance nip region formed by the contact of the first conveyance roller of the corresponding conveyance roller pair 46 and the sheet separation roller 45 disposed below the first conveyance roller. In the separation conveyance nip region, the first conveyance roller that contacts the upper face of the recording sheet applies a conveyance force to the recording sheet from the sheet tray 42 toward a sheet feeding path 44 as the first conveyance roller is driven to rotate in the counterclockwise direction in FIG. 1. In contrast, the sheet separation roller 45 that contacts the lower face of the recording sheet applies a conveyance force to the recording sheet from the sheet feeding path 44 toward the sheet tray 42 as the sheet separation roller 45 is driven to rotate in the counterclockwise direction in FIG. 1, thereby attempting to return the recording sheet to the sheet tray 42.

When a single recording sheet is fed from the sheet tray 42, the first conveyance roller and the sheet separation roller 45 apply the conveyance forces to the recording sheet in directions opposite to each other in the separation conveyance nip region. As a result, a load exceeding a given threshold value is applied to a drive transmission part of the sheet separation roller 45. Then, a torque limiter disposed in the drive transmission part of the sheet separation roller 45 operates to cut off the transmission of the driving force from a direct current (DC) brushless motor to the sheet separation roller 45. Accordingly, the sheet separation roller 45 comes to rotate along with the recording sheet that is conveyed by the first conveyance roller, and the recording sheet is then ejected from the separation conveyance nip region to the sheet feeding path 44.

On the other hand, when multiple recording sheets are fed from the sheet tray 42 in a stacked state, the first conveyance roller applies the conveyance force to the uppermost recording sheet of the multiple recording sheets from the sheet tray 42 toward the sheet feeding path 44 in the separation conveyance nip region. The uppermost recording sheet of the multiple recording sheets is fed from the separation conveyance nip region toward the sheet feeding path 44. In contrast, the sheet separation roller 45 applies the conveyance force to the lower recording sheet or sheets of the multiple recording sheets from the sheet feeding path 44 toward the sheet tray 42, thereby returning the lower recording sheet or sheets from the separation conveyance nip region toward the sheet tray 42. Consequently, in the separation conveyance nip region, the single uppermost recording sheet is separated from the other recording sheet or sheets so as to be fed to the sheet feeding path 44.

The recording sheet that has entered the sheet feeding path 44 enters the conveyance nip region of the conveyance roller pair 46 where the recording sheet receives the upward conveyance force from below in the vertical direction. Consequently, the recording sheet in the sheet feeding path 44 is conveyed toward the sheet conveyance path 37 of the image forming apparatus 1.

The image forming apparatus 1 includes an optical writing device 2, and four image forming units 3K, 3Y, 3M, and 3C that form black (K), yellow (Y), magenta (M), and cyan (C) toner images, respectively.

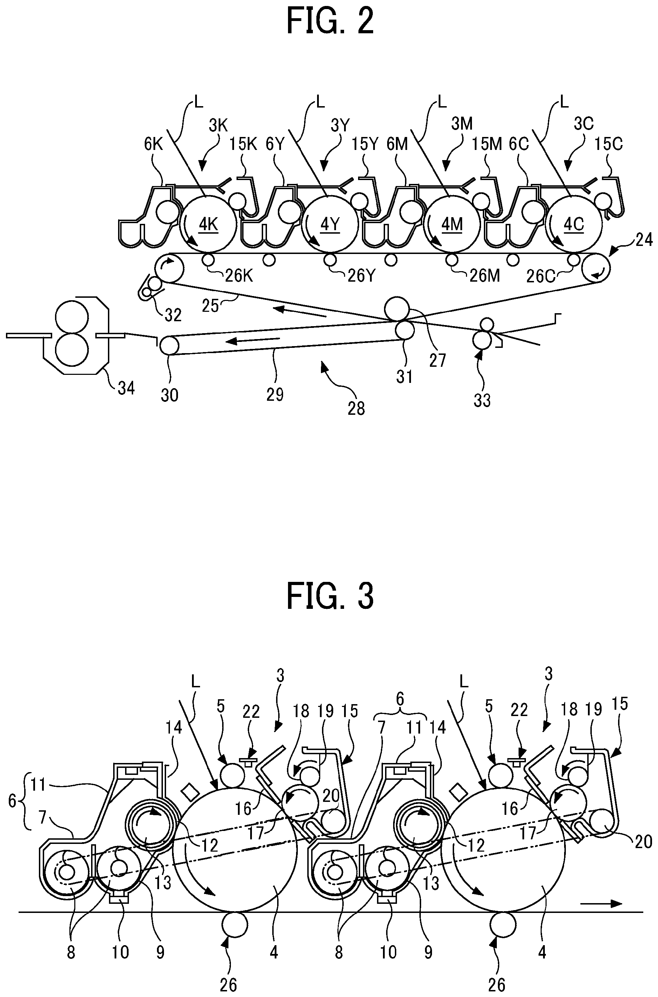

The image forming apparatus 1 further includes a transfer unit 24, a sheet conveyer 28, a registration roller pair 33, a fixing device 34, a switchback device 36, and the sheet conveyance path 37. The optical writing device 2 includes therein a light source such as a laser diode or a light-emitting diode (LED). The optical writing device 2 drives the light source to irradiate four drum-shaped photoconductors 4K, 4Y, 4M, and 4C with laser beams L (see FIGs. 2 and 3). As a result of the photoconductors 4K, 4Y, 4M, and 4C being irradiated with the laser beams L, electrostatic latent images are formed on the surfaces of the photoconductors 4K, 4Y, 4M, and 4C. These electrostatic latent images are developed into toner images through a given development process.

FIG. 2 is a partial view of a part of an internal configuration of the image forming apparatus according to an embodiment. FIG. 3 is a partial enlarged view of a part of a tandem section according to an embodiment. The tandem section includes the four image forming units 3K, 3Y, 3M, and 3C, which have substantially the same configuration except for the toner colors that are respectively used therein. Thus, suffixes K, Y, M, and C are omitted from the reference signs in FIG. 3.

Each of the image forming units 3K, 3Y, 3M, and 3C supports, with a common support member, a corresponding one of the photoconductors 4K, 4Y, 4M, and 4C and various devices disposed around the corresponding one of the photoconductors 4K, 4Y, 4M, or 4C, as a single unit. The image forming units 3K, 3Y, 3M, and 3C are detachably attached to the main body of the image forming apparatus 1. The image forming unit 3K for black is taken as an example. The image forming unit 3K includes, around the photoconductor 4K, a charging device 5, a developing device 6, a drum cleaning device 15, and an electric discharging lamp 22. The copier 100 has a so-called tandem configuration in which the four image forming units 3K, 3Y, 3M, and 3C are disposed to face an intermediate transfer belt 25 (described later) in an endless movement direction of the intermediate transfer belt 25.

The photoconductors 4K, 4Y, 4M, and 4C to be used are, for example, drum-shaped aluminum hollow tubes having thereon a photoconductive layer formed by application of an organic photoconductive material having photosensitivity. Alternatively, the photoconductors 4K, 4Y, 4M, and 4C to be used may have an endless belt shape.

Each of the developing devices 6K, 6Y, 6M, and 6C develops the corresponding electrostatic latent image by a two-component developer including magnetic carrier and non-magnetic toner. Each of the developing devices 6K, 6Y, 6M, and 6C (i.e., the developing device 6) includes a stirring portion 7 and a development portion 11. While stirring the two-component developer accommodated therein, the stirring portion 7 conveys and supplies the two-component developer to a developing sleeve 12. The development portion 11 allows the non-magnetic toner, which is included in the two-component developer held by the developing sleeve 12, to be transferred to a corresponding one of the photoconductors 4K, 4Y, 4M, and 4C (i.e., the photoconductor 4).

The stirring portion 7 is located at a lower position than the development portion 11 and includes two conveyance screws, a partition, and a toner concentration sensor 10. The two conveyance screws 8 are disposed in parallel to each other. The partition is provided between the two conveyance screws 8. The toner concentration sensor 10 is disposed on the bottom of a development case 9.

The development portion 11 includes the developing sleeve 12, a magnetic roller 13, and a doctor blade 14. The developing sleeve 12 faces the photoconductor 4 (i.e., the photoconductors 4K, 4Y, 4M, or 4C) through an opening of the development case 9. The magnetic roller 13 is non-rotatably provided inside the developing sleeve 12. The doctor blade 14 has a leading end that is brought close to the developing sleeve 12. The developing sleeve 12 has a non-magnetic, rotatable tubular body.

The magnetic roller 13 has multiple magnetic poles arranged in the order in a rotation direction of the developing sleeve 12, starting from an opposed position to the doctor blade 14. Each of these magnetic poles applies a magnetic force at a predetermined position in the rotation direction of the developing sleeve 12, to the two-component developer on the developing sleeve 12. Consequently, the two-component developer that is conveyed from the stirring portion 7 is attracted and attached to the surface of the developing sleeve 12, and a magnetic brush of the two-component developer is formed along the lines of the magnetic force on the surface of the developing sleeve 12.

In accordance with rotation of the developing sleeve 12, the magnetic brush is restricted to have an appropriate layer thickness when passing by the opposed position to the doctor blade 14. Then, the magnetic brush is moved to a development region facing the photoconductor 4 (i.e., the photoconductors 4K, 4Y, 4M, and 4C). Due to a potential difference between a development bias that is applied to the developing sleeve 12 and an electrostatic latent image formed on the surface of the photoconductor 4 (i.e., the photoconductors 4K, 4Y, 4M, and 4C), the toner is transferred onto the electrostatic latent image, so that the electrostatic latent image is developed.

Further, after returning into the development portion 11 again along with the rotation of the developing sleeve 12 and then leaving from the surface of the developing sleeve 12 due to repulsion of the magnetic field formed between the magnetic poles of the magnetic roller 13, the two-component developer is returned to the stirring portion 7. An appropriate amount of toner is supplied to the two-component developer in the stirring portion 7 based on a detection result obtained by the toner concentration sensor 10. Alternative to the two-component developer, the developing device 6 according to the present embodiment may employ one-component developer that does not include any magnetic carrier.

The drum cleaning device 15 (i.e., drum cleaning devices 15K, 15Y, 15M, and 15C) includes a cleaning blade 16, a fur brush 17, an electric field roller 18, a scraper 19, and a collection screw 20. The drum cleaning device 15 employs, as the cleaning blade 16, a blade made of an elastic body to be pressed against the photoconductor 4 but may employ another type of blade. To increase the cleanability, the drum cleaning device 15 (i.e., drum cleaning devices 15K, 15Y, 15M, and 15C) adopts the fur brush 17 that is contact-conductive, has an outer circumferential surface that comes into contact with the photoconductor 4 (i.e., the photoconductors 4K, 4Y, 4M, and 4C), and is rotatable in a direction indicated by arrow in FIG. 3.

The fur brush 17 also functions as an applier that scrapes a solid lubricant to obtain fine powder of lubricant and applies the scraped fine powder to the surface of the photoconductor 4 (i.e., the photoconductors 4K, 4Y, 4M, and 4C). The electric field roller 18 is a metallic member that applies a bias to the fur brush 17. The electric field roller 18 is rotatable in a direction indicated by arrow in FIG. 3. The scraper 19 has a leading end that is pressed against the electric field roller 18. The toner attached to the fur brush 17 is transferred onto the electric field roller 18 that is applied with the bias while rotating in contact with the fur brush 17 in a counter direction. After being scraped and removed from the electric field roller 18 by the scraper 19, the toner collected by the scraper 19 falls onto the collection screw 20. The collection screw 20 conveys the collected toner toward an end portion of the drum cleaning device 15 in a direction perpendicular to the drawing sheet, and transfers the collected toner to an external toner recycling transfer device. The external toner recycling transfer device sends the transferred toner to the developing device 6 (i.e., developing devices 6K, 6Y, 6M, and 6C) for recycling.

The electric discharging lamp 22 irradiates the photoconductor 4 (i.e., the photoconductors 4K, 4Y, 4M, and 4C) with light to remove residual electric charge from the surface of the photoconductor 4. The electric charge removed surface of the photoconductor 4 (i.e., photoconductors 4K, 4Y, 4M, and 4C) is uniformly charged by the charging device 5, and then subjected to an optical writing process performed by the optical writing device 2. The charging device 5 illustrated in FIG. 3 is a charging roller that is applied with a charging bias and rotates in contact with the photoconductor 4 (i.e., the photoconductors 4K, 4Y, 4M, and 4C). However, in some embodiments, the charging device 5 may be a scorotron charger that performs a charging process on the photoconductor 4 (i.e., the photoconductors 4K, 4Y, 4M, and 4C) in non-contact with the photoconductor 4.

In the process described above, black (K), yellow (Y), magenta (M), and cyan (C) toner images are formed on the photoconductors 4K, 4Y, 4M, and 4C of the image forming units 3K, 3Y, 3M, and 3C, respectively. The transfer unit 24 is disposed below the image forming units 3K, 3Y, 3M, and 3C. The transfer unit 24 endlessly moves the intermediate transfer belt 25 in the clockwise direction in FIG. 2 while the intermediate transfer belt 25 stretched by and wound around multiple rollers is in contact with the photoconductors 4K, 4Y, 4M, and 4C. Consequently, black (K), yellow (Y), magenta (M), and cyan (C) primary transfer nip regions are formed where the photoconductors 4K, 4Y, 4M, and 4C contact the endless intermediate transfer belt 25, respectively.

In proximity to the K, Y, M, and C primary transfer nip regions, primary transfer rollers 26K, 26Y, 26M, and 26C are disposed inside of the loop formed by the intermediate transfer belt 25 to press the intermediate transfer belt 25 toward the photoconductors 4K, 4Y, 4M, and 4C, respectively. Each of the primary transfer rollers 26K, 26Y, 26M, and 26C receives a primary transfer bias applied by a power supply. Consequently, primary transfer electric fields are formed in the K, Y, M, and C primary transfer nip regions to electrostatically transfer the toner images formed on the photoconductors 4K, 4Y, 4M, and 4C onto the intermediate transfer belt 25, respectively.

As the intermediate transfer belt 25 passes sequentially through the K, Y, M, and C primary transfer nip regions along with the endless movement in the clockwise direction in FIG. 2, the black (K), yellow (Y), magenta (M), and cyan (C) toner images are sequentially transferred onto the outer surface of the intermediate transfer belt 25 at the K, Y, M, and C primary transfer nip regions to be overlaid one on top of the other. As a result of the overlaying primary transfer, a four-color composite toner image (referred to as a four-color toner image) is formed on the outer surface of the intermediate transfer belt 25.

The sheet conveyer 28 is disposed below the transfer unit 24 in FIG. 2. The sheet conveyer 28 includes a sheet conveyance belt 29, a drive roller 30, and a secondary transfer roller 31. The sheet conveyance belt 29 is an endless belt wound around the drive roller 30 and the secondary transfer roller 31. The sheet conveyer 28 endlessly moves the sheet conveyance belt 29. The intermediate transfer belt 25 and the sheet conveyance belt 29 are sandwiched between the secondary transfer roller 31 of the sheet conveyer 28 and a lower tension roller 27 of the transfer unit 24. Consequently, a secondary transfer nip region is formed where the outer surface of the intermediate transfer belt 25 is in contact with the outer surface of the sheet conveyance belt 29. The secondary transfer roller 31 receives a secondary transfer bias applied by the power supply. On the other hand, the lower tension roller 27 of the transfer unit 24 is electrically grounded. Consequently, a secondary transfer electric field is formed in the secondary transfer nip region.

The registration roller pair 33 is disposed on the right side of the secondary transfer nip region in FIG. 2. A registration roller sensor is disposed near an entrance of a registration nip region of the registration roller pair 33. The recording sheet is conveyed from the sheet feeding apparatus 40 to the registration roller pair 33. After a given time has elapsed from the detection of the leading end of the recording sheet by the registration roller sensor, the conveyance of the recording sheet temporarily stops, and the leading end of the recording sheet contacts the registration nip region of the registration roller pair 33.

After the leading end of the recording sheet contacts the registration nip region of the registration roller pair 33, the registration roller pair 33 is driven to restart the rotation at a timing that can synchronize the movement of the recording sheet with the movement of the four-color toner image on the intermediate transfer belt 25, and thus sends out the recording sheet to the secondary transfer nip region. In the secondary transfer nip region, the four-color toner image on the intermediate transfer belt 25 is collectively secondary-transferred onto the recording sheet due to the secondary transfer electric field or the nip pressure. At this time, the four-color toner image is combined with white color of the recording sheet to make a full-color image. After passing through the secondary transfer nip region, the recording sheet is separated from the intermediate transfer belt 25 and is conveyed to the fixing device 34 along with the endless movement of the sheet conveyance belt 29 while being held on the outer surface of the sheet conveyance belt 29.

Residual toner that has not been transferred onto the recording sheet in the secondary transfer nip region remains on the surface of the intermediate transfer belt 25 after the intermediate transfer belt 25 has passed through the secondary transfer nip region. The residual toner is scraped and removed from the surface of the intermediate transfer belt 25 by a belt cleaning device 32 that is in contact with the intermediate transfer belt 25.

After the recording sheet is conveyed to the fixing device 34, the fixing device 34 applies pressure or heat to fix the full-color image on the recording sheet. Then, the recording sheet is conveyed from the fixing device 34 to a sheet ejection roller pair 35 (see FIG. 1) to be ejected to the outside of the image forming apparatus 1.

In FIG. 1, the switchback device 36 is disposed below the sheet conveyer 28 and the fixing device 34. Thus, after an image fixing process is performed on one side of the recording sheet, the direction in which the recording sheet is conveyed is switched by a switching member toward the switchback device 36. The recording sheet is reversed by the switchback device 36, and enters the secondary transfer nip region again. The recording sheet undergoes the secondary transfer process and the fixing process for an image on the other side thereof, and is ejected onto a sheet ejection tray.

The scanner 150 fixed to an upper portion of the image forming apparatus 1 includes a movable reading unit 152.

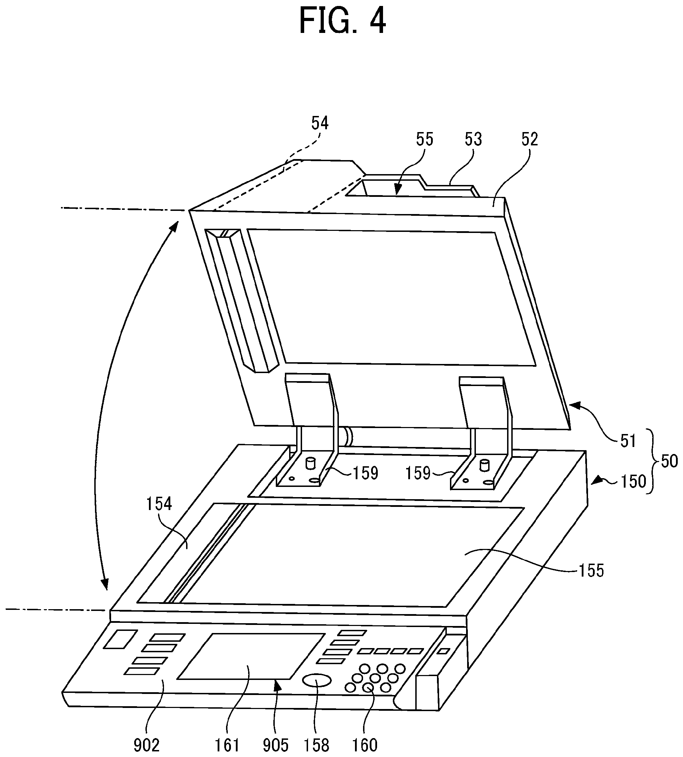

The scanner 150 and the ADF 51 include respective fixed reading units. The movable reading unit 152 is disposed immediately below a second exposure glass 155 (see FIG. 4) that is fixed to the upper wall of a casing of the scanner 150 so as to contact a document MS. The movable reading unit 152 can move an optical system including a light source and reflection mirrors in a left-right direction in FIG. 1. In the course of moving the optical system from left to right in FIG. 1, the light source emits light. The light is reflected by the document MS placed on the second exposure glass 155, is then reflected by the multiple reflection mirrors, and is received by an image reading sensor 153 that is fixed to the scanner 150.

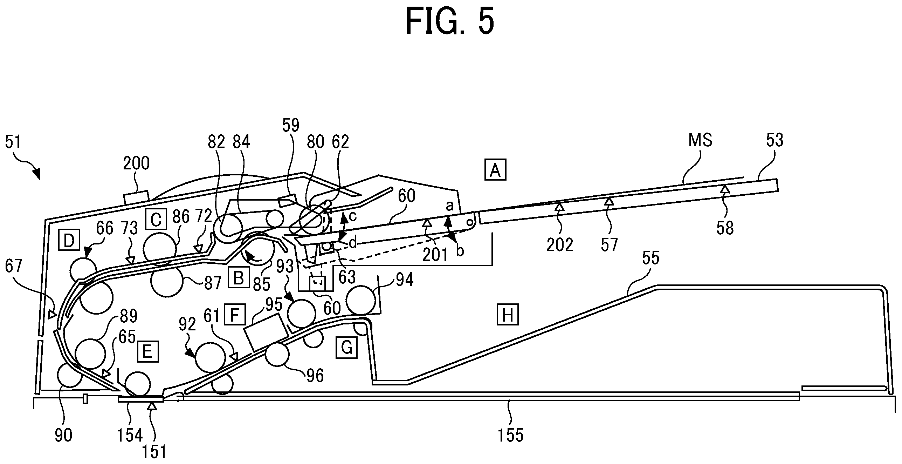

In contrast, the fixed reading units include a first fixed reading unit 151 disposed inside the scanner 150, and a second fixed reading unit 95 (see FIG. 5) disposed inside the ADF 51. The first fixed reading unit 151 includes a light source, reflection mirrors, and an image reading sensor such as a charge coupled device (CCD). The first fixed reading unit 151 is disposed immediately below a first exposure glass 154 (see FIG. 4) that is fixed to the upper wall of the casing of the scanner 150 so as to contact the document MS. When the sheet-like document MS that is conveyed by the ADF 51 (described below) passes over the first exposure glass 154, the light source emits light. After the light is sequentially reflected by the surface of the document MS, the light is further reflected by the multiple reflection mirrors and is received by an image reading sensor. Thus, the first fixed reading unit 151 scans a first face of the document MS without moving the optical system including the light source and the reflection mirrors. The second fixed reading unit 95 scans a second face of the document MS that has passed by the first fixed reading unit 151. The first fixed reading unit 151 and the movable reading unit 152 may be a single unit. In this case, the movable reading unit 152 performs reading when the movable reading unit 152 is under the first exposure glass 154 so as to function as the first fixed reading unit 151.

The ADF 51 disposed on the scanner 150 includes a body cover 52. The body cover 52 holds and supports a document tray 53 on which the document MS to be read is loaded. The document tray 53 serves as a document loading means. The ADF 51 also holds and supports a document conveyer 54 and a document stacking table 55. The document conveyer 54 conveys the document MS that is a sheet member. The documents MS that have been read are stacked on the document stacking table 55.

FIG. 4 is a perspective view of the scanner and the ADF of the copier according to an embodiment. As illustrated in FIG. 4, the ADF 51 is supported to be swingable in the upward and downward directions by hinges 159 fixed to the scanner 150. The ADF 51 swings to move as an opening/closing door. The first exposure glass 154 and the second exposure glass 155 on the upper face of the scanner 150 are exposed when the ADF 51 is open. In the case of the one-side-bound documents such as a book of a document bundle bound on one side, the documents are not separated one by one. Thus, the one-side bound documents cannot be conveyed by the ADF 51.

Accordingly, in the case of the one-side bound documents, the ADF 51 is opened as illustrated in FIG. 4. The one-side bound documents are placed on the second exposure glass 155 with a page to be read facing down. Then, the ADF 51 is closed. Then, the movable reading unit 152 of the scanner 150 illustrated in FIG. 1 reads an image of the page of the one-side bound documents.

On the other hand, in the case of a document bundle that is a stack of multiple documents MS separated from each other, the documents MS can be sequentially read by the first fixed reading unit 151 in the scanner 150 and the second fixed reading unit 95 (see FIG. 5) in the ADF 51 while the ADF 51 automatically conveys the documents MS one by one.

In this case, after the document bundle is placed on the document tray 53, a copy start button 158 is pressed. Then, the ADF 51 sends the documents MS of the document bundle placed on the document tray 53 to the document conveyer 54 sequentially from the topmost document MS, and conveys the documents MS to the document stacking table 55 while reversing the documents MS. In the course of this conveyance of the documents MS, immediately after the document MS is reversed, the document MS passes immediately above the first fixed reading unit 151 of the scanner 150. At this time, the first fixed reading unit 151 of the scanner 150 reads an image on the first face of the document MS.

FIG. 5 is an enlarged view of components of the ADF 51 and an upper part of the scanner 150 according to an embodiment. The ADF 51 includes, for example, a document placement section A, a document separating and feeding section B, a registration section C, a document turning section D, a first reading and conveying section E, a second reading and conveying section F, a document ejecting section G, and a document stacking section H.

The ADF 51 further includes a document conveyance path for conveying the document MS from the document tray 53 toward the first fixed reading unit 151 that is an image reading position.

The document placement section A includes the document tray 53 on which a bundle of documents MS is placed. The document separating and feeding section B separates and feeds the documents MS one by one from the placed bundle of documents MS. The registration section C temporarily contacts the fed document MS, aligns the document MS, and sends out the document MS. The document turning section D has a C-shaped curved conveyance portion. The document turning section D reverses the document MS upside down while turning the document MS in the curved conveyance portion. The first reading and conveying section E causes the first fixed reading unit 151 disposed inside the scanner 150 below the first exposure glass 154 to read the first face of the document MS while conveying the document MS over the first exposure glass 154. The second reading and conveying section F causes the second fixed reading unit 95 to read the second face of the document MS while conveying the document MS under the second fixed reading unit 95. The document ejecting section G ejects the document MS from which the images of both sides have been read toward the document stacking section H. In the document stacking section H, the documents MS are stacked on the document stacking table 55.

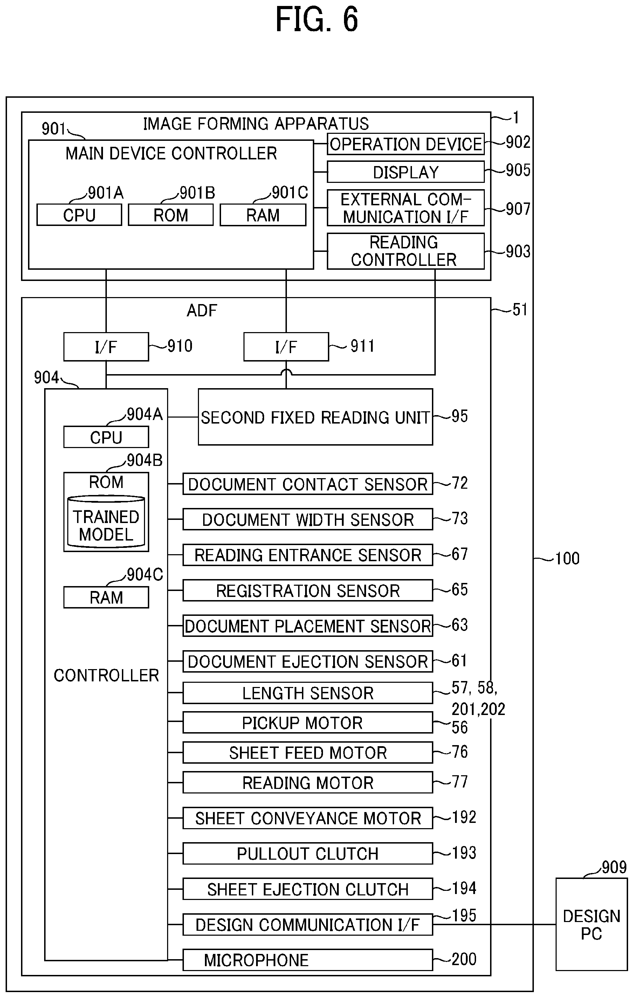

The documents MS are placed such that the leading ends of the documents MS are placed on a movable document table 60 and the trailing ends of the documents MS are placed on the document tray 53. The movable document table 60 is swingable in directions indicated by arrows a and b in FIG. 5 in accordance with the thicknesses of the bundle of the documents MS. Side guides of the document tray 53 contact the respective ends of the documents MS in the width direction (i.e., the direction perpendicular to the drawing sheet) of the documents MS to adjust the position of the documents MS in the width direction. The documents MS thus placed push up a lever member 62 that is disposed above the movable document table 60 to be swingable. In response to the lever member 62 being pushed up, a document placement sensor 63 detects the placement of the documents MS, and transmits a detection signal to a controller 904 (see FIG. 6). The detection signal is then transmitted from the controller 904 to a reading controller 903 (see FIG. 6) of the image forming apparatus 1 (the scanner 150) via an interface (I/F) such as the communication I/F 910.

The document tray 53 is a tray on which a document to be read is placed in the ADF 51.

The document tray 53 corresponds to, for example, the document placement section A.

The document tray 53 holds and supports a first length sensor 57, a second length sensor 58, a third length sensor 202, and a fourth length sensor 201. The first length sensor 57, the second length sensor 58, the third length sensor 202, and the fourth length sensor 201 include a reflective photosensor or an actuator-type sensor for detecting the length of the document MS in the conveyance direction of the document MS. The third length sensor 202 is, for example, a length sensor for checks. The fourth length sensor 201 is, for example, a length sensor for business cards. An example will be described below in which the third length sensor 202 is a length sensor for checks and the fourth length sensor 201 is a length sensor for business cards.

The first length sensor 57, the second length sensor 58, the third length sensor 202, and the fourth length sensor 201 detect the length of the document MS in the conveyance direction of the document MS. The third length sensor 202 is disposed at a position, corresponding to a length slightly greater than the length of checks, where the third length sensor 202 is not turned on when a check is placed on the document tray 53. The fourth length sensor 201 is arranged at a position, corresponding to a length slightly greater than the length of business cards, where the fourth length sensor 201 is not turned on when a business card is placed on the document tray 53.

Whether a document of specified size such as a business card or a check is placed is detectable from detection information obtained by the first length sensor 57, the second length sensor 58, the third length sensor 202, and the fourth length sensor 201. Since the length of checks is 185 mm and the length of business cards is 91 mm, the position of the third length sensor 202 is approximately 190 mm and the position of the fourth length sensor 201 is approximately 96 mm, with respect to a fence against which the leading end of the document MS contacts when the document MS is placed on the document tray 53.

A pickup roller 80 is disposed above the bundle of documents MS placed on the movable document table 60. The pickup roller 80 is supported by a cam mechanism to be movable in the upward and downward directions (i.e., the directions indicated by arrows c and d in FIG. 5). The cam mechanism is driven by a pickup motor 56 to move the pickup roller 80 in the upward and downward directions. As the pickup roller 80 moves upward, the movable document table 60 swings in the direction indicated by arrow a in FIG. 5, so that the pickup roller 80 is brought into contact with the uppermost document MS of the bundle of documents MS.

As the movable document table 60 moves upward, a table elevation detection sensor 59 detects that the movable document table 60 has moved up to the maximum height. In response to this detection, the pickup motor 56 stops driving, so that the upward movement of the movable document table 60 stops.

An operation device 902 includes a numeral keypad 160 provided in the main body of the copier 100 and a touch panel 161 provided in a display 905. A user (operator) performs operations such as operating a button for setting a reading mode indicating a double-sided reading mode or a single-sided reading mode and pressing the copy start button 158, on the operation device 902. When the user presses the copy start button 158, the controller 904 of the ADF 51 receives a document feed signal transmitted from a main device controller 901 (see FIG. 6). The pickup roller 80 is then rotated along with the forward rotation of a sheet feed motor 76 (see FIG. 6), so that the documents MS on the movable document table 60 are fed from the movable document table 60.

When the setting of the double-sided reading mode or the single-sided reading mode is made, the setting of the double-sided reading mode or the single-sided reading mode is collectively set for all the documents MS placed on the movable document table 60. Alternatively, the reading mode can be set individually for each document MS such that the double-sided reading mode is applied to the first and tenth documents MS and the single-sided reading mode is applied to the other documents MS.

The document MS sent out by the pickup roller 80 enters the document separating and feeding section B and is fed to a contact position with a sheet feed belt 84. The sheet feed belt 84 is stretched by and wound around, for example, a drive roller 82, and is endlessly moved in the clockwise direction in FIG. 5 by the rotation of the drive roller 82 along with the forward rotation of the sheet feed motor 76. A sheet separation roller 85 is in contact with the lower stretched face of the sheet feed belt 84. The sheet separation roller 85 is driven to rotate clockwise in FIG. 5 along with the forward rotation of the sheet feed motor 76. At the contact part, the surface of the sheet feed belt 84 moves in the conveyance direction of the document MS. The sheet separation roller 85 is pressed against the sheet feed belt 84 with a predetermined pressure. When the sheet separation roller 85 directly contacts the sheet feed belt 84 or a single document MS is nipped in the contact part, the sheet separation roller 85 is caused to rotate along with the movement of the sheet feed belt 84 or the document MS. However, when multiple documents MS are nipped in the contact part, the force of causing the sheet separation roller 85 to rotate along with the movement of the sheet feed belt 84 or the document MS is lower than the torque of a torque limiter. For this reason, the sheet separation roller 85 is driven to rotate clockwise that is opposite to a direction in which the sheet separation roller 85 is caused to rotate. Consequently, the sheet separation roller 85 applies the force of movement in the direction opposite to the sheet conveyance direction, to the documents MS under the uppermost document MS, so that the uppermost document MS alone is separated from the multiple documents MS. The operation up to this point is hereinafter referred to as a sheet feeding and separating operation.

The single document MS that has been separated by the actions of the sheet feed belt 84 and the sheet separation roller 85 enters the registration section C. When the document MS passes directly under a document contact sensor 72, the document contact sensor 72 detects the leading end of the document MS. At this time, the pickup roller 80 that is receiving the driving force of the pickup motor 56 is still rotating. However, as the pickup roller 80 is separated from the document MS due to a descent of the movable document table 60, the document MS is conveyed only by an endless moving force of the sheet feed belt 84. Then, the endless movement of the sheet feed belt 84 is continued for a given time from the timing at which the document contact sensor 72 detects the leading end of the document MS. Consequently, the leading end of the document MS contacts a contact part of a pullout drive roller 86 and a pullout driven roller 87 that is driven to rotate in contact with the pullout drive roller 86. At this time, if the pickup roller 80 is separated from the document MS from the timing at which the document contact sensor 72 detects the leading end of the document MS, the timing to start conveying the document MS only by the endless movement force of the sheet feed belt 84 can be made earlier or later. By making the timing to start conveying the document MS only by the endless movement force of the sheet feed belt 84 earlier or later, the contact amount of the document MS to the contact part between the pullout drive roller 86 and the pullout driven roller 87 can be adjusted.

If the speed of the document MS at this time is 500 mm/s, the contact amount can be increased by 1 mm by delaying the timing to separate the pickup roller 80 from the document MS by 2 ms. (500 mm/s × 0.002 s = 1 mm)

The pullout driven roller 87 functions to convey the document MS to an intermediate roller pair 66 downstream from the pullout driven roller 87 in the document conveyance direction. The pullout driven roller 87 is driven to rotate by the rotation of the sheet feed motor 76 in the reverse direction. As the sheet feed motor 76 rotates in the reverse direction, the pullout driven roller 87 and one roller of the contacting intermediate roller pair 66 start rotating, and the endless movement of the sheet feed belt 84 stops. At this time, the pickup roller 80 stops rotating.

The document MS that is sent out by the pullout driven roller 87 passes directly under a document width sensor 73. The document width sensor 73 includes multiple sheet detectors each including a reflective photosensor. The sheet detectors are aligned in a row in the width direction of the document MS (i.e., the direction perpendicular to the drawing sheet). The size of the document MS in the width direction is detected based on which one of the sheet detectors detects the document MS. The length of the document MS in the document conveyance direction is detected based on a timing at which the document contact sensor 72 no longer detects the trailing end of the document MS after the document contact sensor 72 detects the leading end of the document MS.

The leading end of the document MS whose size in the width direction has been detected by the document width sensor 73 enters the document turning section D and is nipped in a contact part between the rollers of the intermediate roller pair 66. The conveyance speed of the document MS conveyed by the intermediate roller pair 66 is set faster than the conveyance speed of the document MS in the first reading and conveying section E (described below). This configuration reduces the time for conveying the document MS to the first reading and conveying section E.

As described above, the size of the document MS is detectable by the document width sensor 73, the first length sensor 57, the second length sensor 58, the third length sensor 202, and the fourth length sensor 201. On the other hand, the user can designate the size (reading size) of the document MS with the operation device 902. For example, the user can select and designate the size of business cards (55 mm × 91 mm) and the size of checks (85 mm × 185 mm) from among options for all sizes.

The leading end of the document MS conveyed in the document turning section D passes an opposed position where the leading end of the document MS faces a reading entrance sensor 67. When the reading entrance sensor 67 detects the leading end of the document MS, the conveyance speed of the document MS generated by the intermediate roller pair 66 is reduced before the leading end of the document MS is conveyed to the position of a reading entrance roller pair (pair of rollers 89 and 90) disposed downstream from the reading entrance sensor 67 in the document conveyance direction. As a reading motor 77 (see FIG. 6) starts rotation driving, one roller of the reading entrance roller pair, one roller of a reading exit roller pair 92, and one roller of a second reading exit roller pair 93 each start rotation driving.

In the document turning section D, while the document MS is conveyed in the curved conveyance portion between the intermediate roller pair 66 and the reading entrance roller pair, the document MS is turned upside down and the conveyance direction of the document MS is changed. Then, the leading end of the document MS that has passed through the nip region between the rollers of the reading entrance roller pair passes directly under a registration sensor 65. The operation up to this point after the sheet feeding and separating operation is referred to as a "document pullout operation".

When the registration sensor 65 detects the leading end of the document MS, the conveyance speed of the document MS is reduced over a given conveyance distance. Then, the rotations of the pullout drive roller 86 and the intermediate roller pair 66 are stopped due to the stop of a sheet conveyance motor 192 (see FIG. 6), and the rotation of the reading entrance roller pair is stopped due to the stop of the reading motor 77. Consequently, the conveyance of the document MS is temporarily stopped at the registration position before the first reading and conveying section E. A registration stop signal is transmitted to the reading controller 903.

In the present embodiment, a configuration including the document separating and feeding section B, the registration section C, the document turning section D, the first reading and conveying section E, the second reading and conveying section F, the document ejecting section G, and the document stacking section H functions as a conveyer to convey a document from the document tray 53.

In the present embodiment, one of the first fixed reading unit 151 and the second fixed reading unit 95 functions as a reading unit to read an image on a document while the document is conveyed by the configuration that functions as the conveyer described above.

The ADF 51 is provided with a microphone 200 as an example of a sound collection device. A sound signal representing sound collected by the microphone 200 is transmitted to the controller 904 of the ADF 51. The microphone 200 measures ambient noise of the ADF 51. The sound signal of sound collected by the microphone 200 is converted into pulse code modulation (PCM) data by an analog-to-digital (AD) converter in the controller 904, and is accumulated in a random access memory (RAM) 904C. FIG. 5 illustrates merely an example of the arrangement of the microphone 200. The microphone 200 may be disposed at any position where measurement of the ambient noise of the ADF 51 is possible.

### System Configuration

FIG. 6 is a diagram illustrating an example of a configuration of the copier 100 according to a first embodiment. The copier 100 includes, for example, the image forming apparatus 1 and the ADF 51 attached to the image forming apparatus 1. The copier 100 is connected to and communicates with a design personal computer (PC) 909.

The ADF 51 is an example of a document processing apparatus that is attached to an image forming apparatus and includes an autonomous sheet conveyance mode in which a sheet conveyance operation is performed autonomously without any instruction of the image forming apparatus.

### Configuration of Image Forming Apparatus

In the example in FIG. 6, the image forming apparatus 1 includes, for example, the main device controller 901, the operation device 902, the reading controller 903, the display 905, and an external communication I/F 907. The main device controller 901 has a configuration of a computer, which includes a central processing unit (CPU) 901A, a read-only memory (ROM) 901B, and a random access memory (RAM) 901C.

The operation device 902 is, for example, an input device, such as a touch panel or an operation button, that receives an operation of a user. The display 905 is a display device that displays a display screen such as an operation screen or a setting screen. The external communication I/F 907 is a communication device to communicate with an external apparatus such as a cloud server.

### Configuration of ADF

FIG. 6 is also a block diagram illustrating a part of an electric circuit of the ADF (document processing apparatus) 51. In the example in FIG. 6, the ADF 51 includes the controller 904, the second fixed reading unit 95, the document contact sensor 72, the document width sensor 73, the reading entrance sensor 67, the registration sensor 65, the document placement sensor 63, a document ejection sensor 61, the first length sensor 57, the second length sensor 58, the third length sensor 202, the fourth length sensor 201, the sheet feed motor 76, the reading motor 77, the sheet conveyance motor 192, a pullout clutch 193, a sheet ejection clutch 194, a design communication I/F 195, and the microphone 200.

The controller 904 has a configuration of a computer, which includes a CPU 904A, a ROM 904B, and the RAM 904C. Preferably, the controller 904 further includes a storage device. The design communication I/F 195 is a communication device to communicate with the design PC 909.

The main device controller 901 and the reading controller 903 are connected to and communicate with each other. The reading controller 903 and the controller 904 are connected to and communicate with each other. The controller 904 and the main device controller 901 are connected to and communicate with each other via a communication I/F 910. The second fixed reading unit 95 and the main device controller 901 are connected to and communicate with each other via a communication I/F 911.

The sheet conveyance motor 192, which is connected to the controller 904, is a rotation drive source for the pullout drive roller 86 and a document ejection roller pair 94 in the ADF 51. The pullout clutch 193, which is connected to the controller 904, connects and disconnects the rotation driving force of the sheet conveyance motor 192 to and from the pullout drive roller 86. The sheet ejection clutch 194 connects and disconnects the rotation driving force of the sheet conveyance motor 192 to and from the document ejection roller pair 94, which serves as a feeding and conveying means.

After receiving the registration stop signal from the controller 904, the reading controller 903 transmits a reading start signal, which serves as a sheet feed permission signal, to the controller 904. After receiving the reading start signal serving as the sheet feed permission signal, the controller 904 restarts the rotations of the sheet conveyance motor 192 and the reading motor 77. At a timing of the leading end of the document MS reaching the reading position of the first fixed reading unit 151 (see FIG. 5), which is calculated based on a pulse count of the reading motor 77, the controller 904 transmits a gate signal to the reading controller 903. The gate signal indicates an effective image area of the first face of the document MS in the sub-scanning direction. This transmission is continued until the trailing end of the document MS passes by the reading position of the first fixed reading unit 151, so that the first face of the document MS is read by the first fixed reading unit 151.

The document MS that has passed by the first reading and conveying section E passes through the reading exit roller pair 92. Then, the leading end of the document MS is detected by the document ejection sensor 61. When the single-sided reading mode is set, the second fixed reading unit 95 does not read the second face of the document MS. Thus, when the leading end of the document MS is detected by the document ejection sensor 61, the sheet ejection clutch 194 connects the driving force of the sheet conveyance motor 192 to the document ejection roller pair 94. The timing of the trailing end of the document MS passing by the nip region of the document ejection roller pair 94 is calculated based on a pulse count of a sheet ejection motor after the document ejection sensor 61 detects the leading end of the document MS. Then, based on this calculation result, the action of the sheet ejection clutch 194 is stopped.

On the other hand, when the double-sided reading mode is set, a timing of the leading end of the document MS reaching the second fixed reading unit 95 is calculated based on a pulse count of the reading motor 77 after the document ejection sensor 61 detects the leading end of the document MS. Then, at the timing indicated by the calculation result, the controller 904 transmits a gate signal to the reading controller 903. The gate signal indicates an effective image area of the second face of the document MS in the sub-scanning direction. This transmission is continued until the trailing end of the document MS passes by the reading position of the second fixed reading unit 95, so that the second face of the document MS is read by the second fixed reading unit 95.

The second fixed reading unit 95 includes a contact image sensor (CIS). To prevent vertical reading streaks caused by attachment of an adhesive foreign object, which has adhered to the document MS, to the read surface of the second fixed reading unit 95, coating processing is performed on the read surface. At an opposed position of the second fixed reading unit 95, a second read roller 96 (see FIG. 5) is disposed. The second read roller 96 serves as a document supporting means that supports the document MS from a non-read-surface side. The second read roller 96 functions to prevent the document MS from lifting at the reading position of the second fixed reading unit 95, and functions as a reference white area when the second fixed reading unit 95 acquires shading data.

### Description of How to Determine Sound Pleasantness

A technique of the related art changes the operation mode of a copier or the like to reduce a noise value (dB) in accordance with a surrounding environment. However, such a technique does not take into account how people feel for sound produced by the copier or the like. For example, rhythmical sound and dissonance cause different degrees of unpleasantness in people even though the rhythmical sound and dissonance have the same noise value (dB).

Accordingly, the ADF 51 controls reading of documents in consideration of the viewpoint of sound pleasantness which people feel for sound. Thus, the controller 904 of the ADF 51 determines the sound pleasantness of sound produced when the ADF 51 reads the documents MS. In the present embodiment, a trained model 1100 is used in determining the sound pleasantness. In the present embodiment, the ROM 904B of the controller 904 stores the trained model 1100. The CPU 904A of the controller 904 deploys the trained model 1100 to the RAM 904C or the like, and uses the trained model 1100 in processing.

The trained model 1100 is a model on which machine learning has been performed using labeled training data. The labeled training data includes document processing information as input data, and sound pleasantness and productivity (the number of documents processed per predetermined time) as output data.

That is, the trained model 1100 estimates the sound pleasantness of sound produced by the ADF 51 and the productivity of the ADF 51 in the case where the ADF 51 processes documents in accordance with the document processing information.

The document processing information includes at least one of a setting for conveying a document by the conveyer (e.g., the document separating and feeding section B, the registration section C, the document turning section D, the first reading and conveying section E, the second reading and conveying section F, the document ejecting section G, and the document stacking section H) and a setting for reading the document by a reading unit (e.g., one of the first fixed reading unit 151 and the second fixed reading unit 95). The document processing information according to the present embodiment further includes information on the document placed on the document tray 53.

For example, the document processing information includes information items such as a reading setting (single-sided or double-sided), a sheet feeding speed, a first contact amount, a pullout speed, a second contact amount, a document interval time, and whether to stop the pullout driven roller at the time of the second contact. For example, the document processing information includes a document size, a sheet type and sheet thickness, as the information on the document. Information items that do not affect the reading function and thus are changeable in the document processing information include, for example, the sheet feeding speed, the first contact amount, the pullout speed, the second contact amount, the document interval time, and whether to stop the pullout driven roller at the time of the second contact.

The sheet feeding speed refers to the highest speed from when the document separation and feeding is started to when the leading end of the document reaches the pullout driven roller 87. The pullout speed refers to the highest speed from when the leading end of the document reaches the pullout driven roller 87 to when the leading end of the document reaches the reading entrance roller pair (89 and 90). The first contact amount refers to a contact amount of the document to the pullout driven roller 87. The second contact amount refers to a contact amount of the document to the reading entrance roller pair (89 and 90). The document interval time refers to a time from when the trailing end of one document of documents consecutively conveyed passes by the first fixed reading unit 151 to when the leading end of the next document reaches the first fixed reading unit 151.

Whether to stop the pullout driven roller at the time of the second contact indicates whether the contact is made when the pullout driven roller is completely stopped at the time of the second contact (yes) or the contact is made while the pullout driven roller is rotating at the reading speed (no).

The present embodiment presents an example of the document processing information that includes not only the setting for conveying the document and the setting for reading the document but also the information (e.g., the document size, the sheet type, and the sheet thickness) on the document placed on the document tray 53. However, the document processing information is not limited to the one including the information on the document placed on the document tray 53 and may include no information on the document placed on the document tray 53. The document processing information described above merely presents an example of the setting for conveying the document and the setting for reading the document, which may be any settings related to conveyance or reading of the document.

The sound pleasantness is an index indicating the comfort that people feel for sound when the people hear the sound, for example. It is considered that the sound pleasantness increases when sound of a regular waveform, in other words, rhythmical sound is produced by the operation of the ADF 51, whereas the sound pleasantness decreases when dissonance is caused by multiple sounds produced by multiple components of the ADF 51, for example. It is further considered that the sound pleasantness decreases when loud sound is suddenly produced.

The present embodiment presents an example in which the sound pleasantness is denoted by a numerical value from 1 to 10. That is, the sound pleasantness of "1" indicates the most unpleasant sound. A larger numerical value of the sound pleasantness indicates more comfortable sound. The sound pleasantness of "10" indicates the most comfortable sound. Note that the present embodiment presents the case where the numerical value is used as an example of information representing the sound pleasantness, but does not limit the representation of the sound pleasantness to the numerical value.

The sound pleasantness used in the labeled training data of the trained model 1100 is set based on results of evaluation performed by users who actually heard the sound.

The productivity is represented by the number of read documents processable per predetermined time (e.g., one minute).

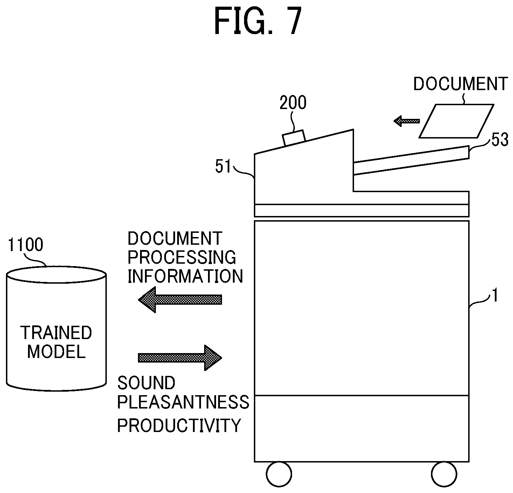

FIG. 7 is a diagram for describing estimation of the sound pleasantness and the productivity by the trained model 1100. When reading documents placed on the document tray 53, the ADF 51 estimates the sound pleasantness and the productivity using the trained model 1100. For example, the controller 904 of the ADF 51 feeds the document processing information set by the image forming apparatus 1 to the trained model 1100 as the input data, and receives the sound pleasantness and the productivity from the trained model 1100 as the output data.

The controller 904 of the ADF 51 determines whether the sound pleasantness received from the trained model 1100 exceeds a predetermined criterion. If the controller 904 determines that the sound pleasantness is lower than or equal to the criterion, the controller 904 changes the setting to increase the sound pleasantness. The controller 904 may change the setting based on the productivity in addition to the sound pleasantness. For example, in one method, the controller 904 changes the setting to a setting that achieves the highest productivity among settings that achieve the sound pleasantness higher than the criterion. The controller 904 may automatically change the setting, or change the setting in response to receipt of a setting change instruction from the user.

### Functional Configuration

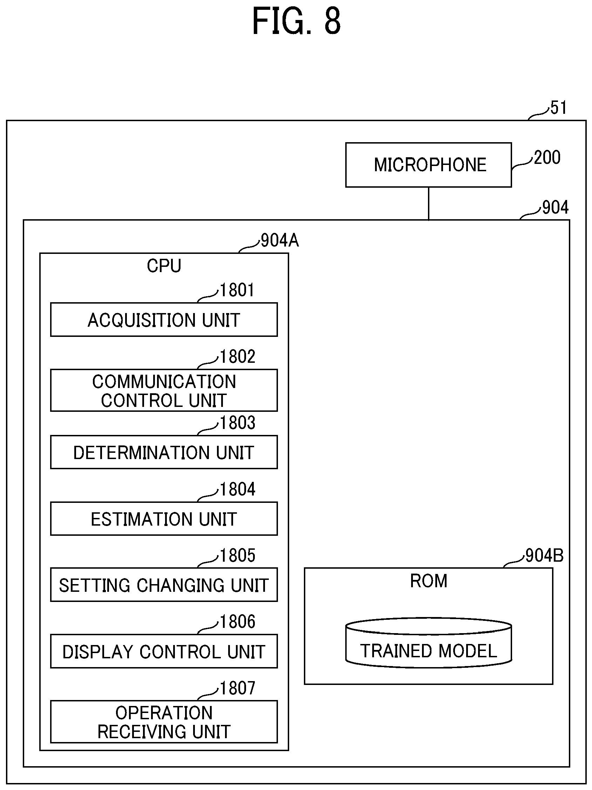

FIG. 8 is a diagram illustrating an example of a functional configuration of a document processing system according to the first embodiment. The document processing system is implemented, for example, by the ADF (document processing apparatus) 51. In the example in FIG. 8, the ADF 51 implements an acquisition unit 1801, a communication control unit 1802, a determination unit 1803, an estimation unit 1804, a setting changing unit 1805, a display control unit 1806, and an operation receiving unit 1807 as a result of the CPU 904A executing a program stored in the ROM 904B. The ROM 904B of the ADF 51 stores the trained model 1100.

The acquisition unit 1801 acquires detection results obtained by various sensors. For example, the acquisition unit 1801 acquires a noise value in a surrounding environment from the microphone 200.

The acquisition unit 1801 further receives the document processing information from the image forming apparatus 1. The acquisition unit 1801 further acquires image forming apparatus information from the image forming apparatus 1.

The image forming apparatus information is information indicating the current status that allows the confirmation of sound or the like produced by the image forming apparatus 1. For example, the image forming apparatus information includes whether the image forming apparatus 1 is in operation and the current operation mode set in the image forming apparatus 1.

The communication control unit 1802 transmits or receives information to or from various apparatuses. For example, the communication control unit 1802 performs a process of transmitting or receiving information to or from the design PC 909 connected to the ADF 51 via the design communication I/F 195.

The determination unit 1803 determines whether the surrounding environment is quiet to a degree that the ADF 51 desirably takes into account the sound pleasantness. That is, when the surrounding environment is quiet, the controller 904 controls the ADF 51 to produce sound of high sound pleasantness. When the surrounding environment is loud, the controller 904 performs a process without taking into account the sound pleasantness since it is estimated that the sound produced by the ADF 51 is drowned out. Specific content of the determination will be described later.

If the determination unit 1803 determines that the surrounding environment is quiet to the degree that the ADF 51 desirably takes into account the sound pleasantness, the estimation unit 1804 estimates the sound pleasantness of the sound produced by the ADF 51 in the case where the ADF 51 conveys or reads the documents, based on the document processing information. The estimation unit 1804 also estimates the number of documents processable per predetermined time (e.g., one minute), in other words, the productivity. In a specific example, when inputting the document processing information to the trained model 1100, the estimation unit 1804 receives estimation results of the sound pleasantness and the productivity from the trained model 1100.

If the estimation unit 1804 estimates that the sound pleasantness based on the document processing information is lower than the criterion, the setting changing unit 1805 changes the setting to increase the sound pleasantness. A specific procedure of the process will be described later.

The display control unit 1806 performs control to display information on the display 905 of the image forming apparatus 1. For example, the display control unit 1806 performs control to transmit to-be-displayed information to the image forming apparatus 1 via the communication I/F 910.

The operation receiving unit 1807 receives an operation related to the ADF 51, input on the operation device 902. For example, the operation receiving unit 1807 receives an operation related to the operation mode of the ADF 51.

Note that the functional configuration of the document processing system illustrated in FIG. 8 is an example. For example, at least some of the functional units of the ADF 51 illustrated in FIG. 8 may be included in the image forming apparatus 1, the design PC 909, or an external apparatus (e.g., cloud server).

### Process Flow

A flow of a process of a document processing method performed by the ADF 51 will be described next.

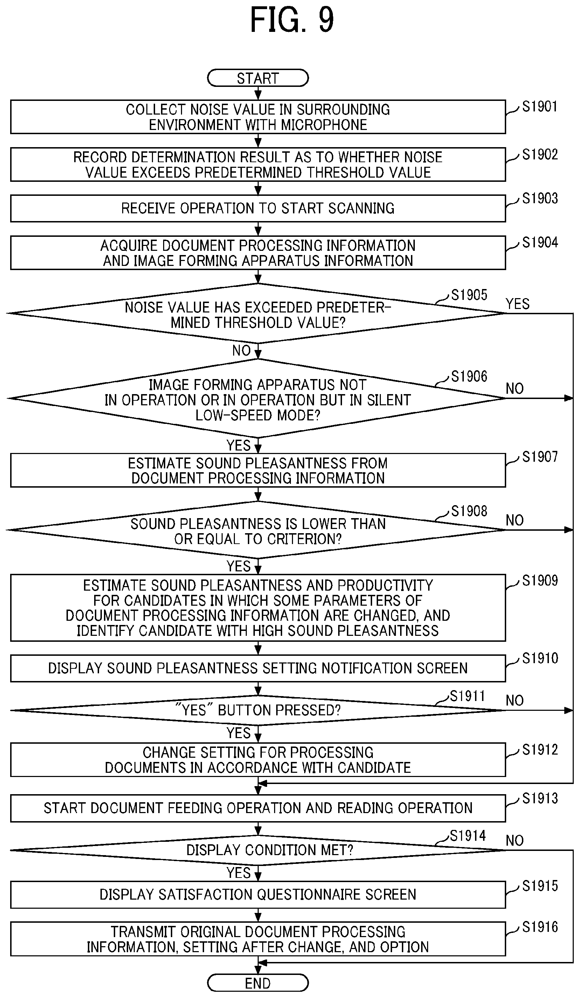

FIG. 9 is a flowchart illustrating an example of a procedure of document processing performed by the controller 904 of the ADF 51 according to the first embodiment.

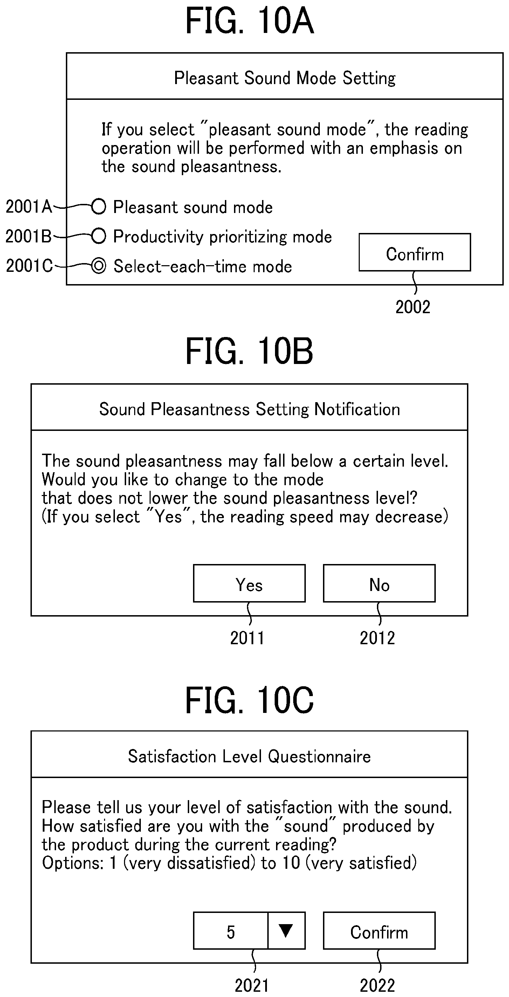

FIGs. 10A to 10C are diagrams each illustrating an example of a screen related to the document processing performed by the ADF according to the first embodiment. FIG. 10A illustrates an example of a pleasant sound mode setting screen included in setting screens of the ADF 51 and displayed by the display control unit 1806. The pleasant sound mode setting screen illustrated in FIG. 10A includes a radio button 2001A for selecting a pleasant sound mode, a radio button 2001B for selecting a productivity prioritizing mode, a radio button 2001C for selecting a select-each-time mode in which the mode is selected for each document processing, and a confirm button 2002. When the operation receiving unit 1807 receives selection of the radio button 2001A, the radio button 2001B, or the radio button 2001C and then receives pressing of the confirm button 2002 via the operation device 902, the controller 904 proceeds with the process at the time of the document processing in accordance with the selected mode.

If the operation receiving unit 1807 receives selection of the radio button 2001A (pleasant sound mode), the controller 904 skips displaying a screen based on processing in S1910 in FIG. 9 and automatically performs processing in the case of "YES" in branch processing in S1911 in FIG. 9 when performing the process illustrated in FIG. 9. If the operation receiving unit 1807 receives selection of the radio button 2001B (productivity prioritizing mode), the controller 904 skips displaying the screen based on the processing in S1910 in FIG. 9 and automatically performs processing in the case of "NO" in the branch processing in S1911 in FIG. 9 when performing the process illustrated in FIG. 9. If the operation receiving unit 1807 receives selection of the radio button 2001C (select-each-time mode), the controller 904 performs the process in accordance with the procedure illustrated in FIG. 9.

An example has been described in which the operation receiving unit 1807 receives selection of a radio button as the operation related to changing of the setting. However, the present embodiment does not limit the operation related to changing of the setting to receiving selection of a radio button, and the operation may be any operation that enables receipt of an approval for changing the setting.

Referring back to FIG. 9, in S1901, the acquisition unit 1801 collects (acquires) a noise value in the surrounding environment from the microphone 200. The timing at which the acquisition unit 1801 collects the noise value in the surrounding environment is when all the driving mechanisms of the image forming apparatus 1 and the ADF 51 stop operating so that no operation sound of the image forming apparatus 1 and the ADF 51 is collected.

In S1902, the determination unit 1803 determines whether the collected noise value exceeds a predetermined threshold value, and records a determination result in the RAM 904C.

In S1903, the operation receiving unit 1807 receives an operation to start scanning from the operation device 902.

In S1904, the acquisition unit 1801 acquires the document processing information and the image forming apparatus information from the image forming apparatus 1. The document processing information indicates the setting for processing documents in response to the scan start. The image forming apparatus information includes the operation mode set in the image forming apparatus 1 along with whether the image forming apparatus 1 is currently in operation.

In S1905, the determination unit 1803 determines whether the noise value has exceeded the predetermined threshold value, based on the determination result recorded in the RAM 904C. If the determination unit 1803 determines that the noise value has exceeded the predetermined threshold value (S1905: YES), the controller 904 determines not to consider the sound pleasantness, in other words, not to change the setting for conveying the documents by the conveyer because noise is loud in the surrounding environment. In S1913, the controller 904 starts a document feeding operation and a reading operation by the ADF 51, based on the document processing information (without estimating the sound pleasantness). Thus, the controller 904 successfully maintains the productivity.

On the other hand, if the determination unit 1803 determines that the noise value has not exceeded the predetermined threshold value based on the determination result stored in the RAM 904C (S1905: NO), the determination unit 1803 determines in S1906 whether the image forming apparatus 1 is not in operation or the image forming apparatus 1 is in operation but in a silent low-speed mode based on the image forming apparatus information. If the determination unit 1803 determines that the image forming apparatus 1 is in operation and is not in the silent low-speed mode (S1906: NO), the controller 904 determines that the nearby people are less likely to feel the sound pleasantness even if the ADF 51 increases the sound pleasantness because of the operation sound produced by the image forming apparatus 1. In S1913, the controller 904 starts the document feeding operation and the reading operation by the ADF 51, based on the document processing information.

On the other hand, if the determination unit 1803 determines that the image forming apparatus 1 is not in operation or the image forming apparatus 1 is in operation but in the silent low-speed mode (S1906: YES), the estimation unit 1804 regards the sound pleasantness of the ADF 51 as being prioritized because the surrounding environment is relatively quiet, and estimates the sound pleasantness from the document processing information (S1907). Specifically, the estimation unit 1804 inputs the document processing information to the trained model 1100, and receives information indicating the sound pleasantness and the productivity from the trained model 1100.

In S1908, the estimation unit 1804 determines whether the sound pleasantness indicated by the received information is lower than or equal to a criterion. If the estimation unit 1804 determines that the sound pleasantness is higher than the criterion (S1908: NO), the controller 904 starts the document feeding operation and the reading operation of the ADF 51 based on the document processing information in S1913.

On the other hand, if the estimation unit 1804 determines that the sound pleasantness is lower than or equal to the criterion (S1908: YES), the estimation unit 1804 generates multiple candidates for the document processing information in which some parameters that do not affect the reading function are changed from the original document processing information, estimates the sound pleasantness and the productivity for each of the multiple candidates for the document processing information, and identifies a candidate with the setting that achieves the highest productivity from among candidates that achieve the sound pleasantness higher than the criterion in S1909. The estimation unit 1804 inputs the multiple candidates for the document processing information in which some parameters that do not affect the reading function are changed from the original document processing information, to the trained model 1100, and thus receives the sound pleasantness and the productivity for each of the candidates. A method of determining whether the sound pleasantness is lower than or equal to the criterion will be described.

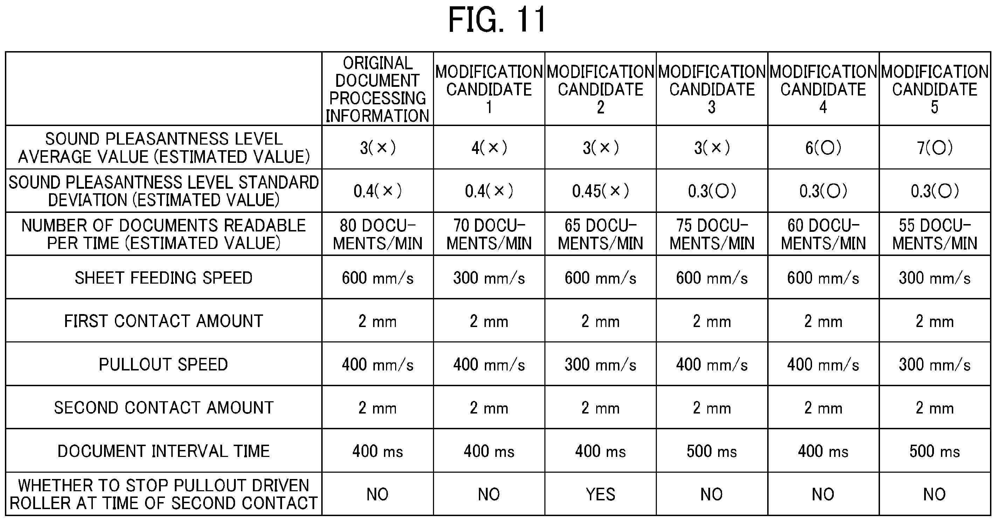

FIG. 11 is a diagram for describing estimation of the sound pleasantness and the productivity performed for each document processing information by the estimation unit 1804. FIG. 11 illustrates an example in which candidates 1 to 5 for the modified document processing information are generated by changing the sheet feeding speed, the first contact amount, the pullout speed, the second contact amount, the document interval time, and whether to stop the pullout driven roller at the time of the second contact that do not affect the reading function in the document processing information.

In the example illustrated in FIG. 11, a "sound pleasantness level average value (estimated value)" and a "sound pleasantness level standard deviation (estimated value)" are an example of parameters indicating the sound pleasantness. In the present embodiment, as a sound pleasantness comprehensive evaluation method, whether the sound pleasantness is lower than or equal to the criterion is determined based on two elements, i.e., the "sound pleasantness level average value (estimated value)" and the "sound pleasantness level standard deviation (estimated value)".

The sound pleasantness level average value (estimated value) is a value estimated as the average value of the sound pleasantness for multiple persons hearing the sound. The sound pleasantness level standard deviation is a value representing, as the standard deviation, a variance in the sound pleasantness for multiple persons hearing the sound. A larger sound pleasantness level standard deviation indicates that the sound causes varying perceptions such that some people feel the sound unpleasant and other people feel the sound comfortable. Thus, a smaller sound pleasantness level standard deviation (estimated value) is more preferable as the sound pleasantness. In the present embodiment, the parameters indicating the sound pleasantness are not limited to the "sound pleasantness level average value (estimated value)" and the "sound pleasantness level standard deviation (estimated value)". For example, the "sound pleasantness level average value (estimated value)" alone may be used, or another parameter such as a sound pleasantness level total value may be used.

These two elements are used in the present embodiment because the sound pleasantness is not a numerical value obtained simply by measuring sound with a sound level meter or the like but varies due to how people feel for the sound. That is, it is considered that even for the same operation sound, the sound pleasantness indicating whether a person feels the sound comfortable varies depending on the person, the environment, or the like. Therefore, when the determination is made based on the sound pleasantness level average value alone, many users have no problem with the sound but some of the other users may feel the sound very unpleasant. Accordingly, in the present embodiment, sound with a larger sound pleasantness level average value and a smaller sound pleasantness level standard deviation is regarded more preferable as the comprehensive evaluation.

A "number of documents readable per time (estimated value)" is used as an example of a parameter indicating the productivity.

The determination criterion for the "sound pleasantness level average value (estimated value)" is whether the "sound pleasantness level average value (estimated value)" is greater than 5.5, which is a criterion value for average. The determination criterion for the "sound pleasantness level standard deviation (estimated value)" is whether the "sound pleasantness level standard deviation (estimated value)" is less than 0.35, which is a criterion value for standard deviation.

That is, the estimation unit 1804 determines that the sound pleasantness is higher than the criterion when the "sound pleasantness level average value (estimated value)" is greater than 5.5, which is the criterion value for average, and the "sound pleasantness level standard deviation (estimated value)" is less than 0.35, which is the criterion value for standard deviation. On the other hand, the estimation unit 1804 determines that the sound pleasantness is lower than or equal to the criterion when the "sound pleasantness level average value (estimated value)" is less than or equal to 5.5, which is the criterion value for average, or the "sound pleasantness level standard deviation (estimated value)" is greater than or equal to 0.35, which is the criterion value for standard deviation.

In the example illustrated in FIG. 11, the original document processing information has the "sound pleasantness level average value (estimated value)" of "3" and the "sound pleasantness level standard deviation (estimated value)" of "0.4". Thus, the estimation unit 1804 estimates that the "sound pleasantness level average value (estimated value)" and the "sound pleasantness level standard deviation (estimated value)" are below the comfort criterion.

In the example illustrated in FIG. 11, whether the "sound pleasantness level average value (estimated value)" or the "sound pleasantness level standard deviation (estimated value)" exceeds the comfort criterion is indicated by a circle (meaning that the comfort criterion is met) and cross (meaning that the comfort criterion is not met) in parentheses.

The estimation unit 1804 then estimates the "sound pleasantness level average value (estimated value)", the "sound pleasantness level standard deviation (estimated value)", and the "number of documents readable per time (estimated value)" for each of the modification candidates 1 to 5 for the document processing information in which the parameters that do not affect the reading function are changed.

The modification candidates 1 to 5 are automatically generated by changing the parameters that do not affect the reading function. For this reason, no measurements are performed for the sound pleasantness or the like.

However, the use of the trained model 1100 allows the estimation unit 1804 to estimate the sound pleasantness and the productivity for each of the modification candidates 1 to 5 that are automatically generated.

The estimation unit 1804 inputs the document processing information corresponding to each of the modification candidates 1 to 5 to the trained model 1100. Consequently, the estimation unit 1804 receives, from the trained model 1100, the "sound pleasantness level average value (estimated value)", the "sound pleasantness level standard deviation (estimated value)", and the "number of documents readable per time (estimated value)" of each of the modification candidates 1 to 5.

Based on the received estimation results, the estimation unit 1804 identifies a modification candidate that meets the comfort criterion. In the example illustrated in FIG. 11, the estimation unit 1804 identifies the modification candidates 4 and 5 as modification candidates meeting the criterion.

The estimation unit 1804 then identifies the modification candidate 4 having a greater "number of documents readable per time (estimated value)" of the modification candidates 4 and 5, as a modification having the settings to be changed.

Referring back to FIG. 9, in S1910, the display control unit 1806 displays a sound pleasantness setting notification screen.

Specifically, the display control unit 1806, which is an example of an output control unit, outputs a notification related to a change in the setting for conveying the document by the conveyer to the display 905.

FIG. 10B illustrates an example of the sound pleasantness setting notification screen displayed by the display control unit 1806 in S1910. The sound pleasantness setting notification screen illustrated in FIG. 10B illustrates "Yes" button 2011 and a "No" button 2012. Depending on which of pressing of the "Yes" button 2011 or pressing of the "No" button 2012 is received by the operation receiving unit 1807 via the operation device 902, the determination result in S1911 in FIG. 9 changes.

Referring back to FIG. 9, in S1911, the setting changing unit 1805 determines whether the operation receiving unit 1807 has received pressing of the "Yes" button 2011. If the setting changing unit 1805 determines that pressing of a button other than the "Yes" button 2011, in other words, pressing of the "No" button 2012 is received (S1911: NO), the controller 904 recognizes that the productivity prioritizing mode is selected. In S1913, the controller 904 starts the document feeding operation and the reading operation by the ADF 51, based on the document processing information. As described above, when the user does not mind the sound of the ADF 51 or does not desire to reduce the productivity, the ADF 51 is operated without any change based on the document processing information. Thus, the productivity achieved by the ADF 51 is successfully maintained.

On the other hand, if the setting changing unit 1805 determines that pressing of the "Yes" button 2011 is received (S1911: YES), the controller 904 recognizes that the pleasant sound mode is selected. In S1912, the setting changing unit 1805 changes the setting for processing documents in accordance with the identified candidate for the document processing information. As described above, the setting changing unit 1805 changes the setting for conveying the documents by the conveyer, based on the estimation result of the sound pleasantness obtained by the estimation unit 1804.

In S1913, the controller 904 starts the document feeding operation and the reading operation of the ADF 51, based on the changed settings.

In S1914, the display control unit 1806 determines whether a condition for displaying a questionnaire is met. The condition for displaying a questionnaire may be determined in accordance with each embodiment. For example, the condition may be the change of the setting in S1912 or a certain probability is met by a raffle among the cases where the setting is changed in S1912. If the display control unit 1806 determines that the condition for displaying a questionnaire is not met (S1914: NO), the process ends.

If the display control unit 1806 determines that the condition for displaying a questionnaire is met (S1914: YES), the display control unit 1806 displays a satisfaction questionnaire screen in S1915.

FIG. 10C illustrates an example of the satisfaction questionnaire screen. The satisfaction questionnaire screen illustrated in FIG. 10C illustrates a drop-down menu 2021 for selecting an option indicating the satisfaction level from "1" to "10", and a confirm button 2022. When the operation receiving unit 1807 receives selection of the option of the satisfaction level from the drop-down menu 2021 and then receives pressing of the confirm button 2022 via the operation device 902, the controller 904 recognizes that the input of the satisfaction level is completed, and proceeds with the process.

Referring back to FIG. 9, in S1916, the communication control unit 1802 transmits the original document processing information (an example of a setting before a change), the setting after the change, and the selected option of the satisfaction level associated with one another to an external apparatus (e.g., the design PC 909). The process then ends. The transmission timing is not limited to each time when the questionnaire is performed. For example, the controller 904 may store a setting change count in the ROM 904B, and the communication control unit 1802 may collectively transmit, at a given timing, as many sets of the original document processing information, the setting after the change, and the selected option of the satisfaction level associated with one another, as the setting change count, to the external apparatus.

Based on the received information, the external apparatus recognizes the change in the sound pleasantness in each environment or for each setting.

The sound pleasantness evaluation experiment may be performed in accordance with the received information, so that labeled training data more suitable for machine learning is successfully acquired. Thus, a designer of the ADF 51 can recognize the actual use condition under which the user experienced reduced sound pleasantness. The measurement and the sound pleasantness evaluation experiment based on the received information allows the designer of the ADF 51 to acquire more efficient labeled training data. Thus, the present embodiment implements an improved estimation accuracy of the sound pleasantness using the trained model 1100.

It is considered that comfortable sound varies depending on the industry or the site to which the copier 100 is shipped, that is, the sound pleasantness level average value and the variance (standard deviation) of the sound pleasantness level vary. However, the copier 100 receives inputs to the satisfaction questionnaire screen, and thus collects the actual satisfaction levels. The external apparatus or the like may generate labeled training data by taking into account the option included in the received information and perform additional learning to generate the trained model 1100 that takes into account the industry or the site to which the copier 100 is shipped.

As described in the flowchart above, the setting changing unit 1805 changes the setting for conveying the document by the conveyer, based on the estimation result of the sound pleasantness obtained by the estimation unit 1804. This can implement improved sound pleasantness.

The procedure of the process illustrated in FIG. 9 is for an example in which the ADF 51 operates in the pleasant sound mode according to the occasion because the sound of the ADF 51 is loud when the image forming apparatus 1 is not in operation or is in operation but in the silent low-speed mode. However, the controller 904 does not limit the processing switching method to the one according to the operation state of the image forming apparatus 1 as illustrated in FIG. 9. Modifications include a method in which when causing the ADF 51 to operate in the pleasant sound mode, the controller 904 may notify the image forming apparatus 1 that the ADF 51 operates in the pleasant sound mode to cause the image forming apparatus 1 to operate in the silent low-speed mode.

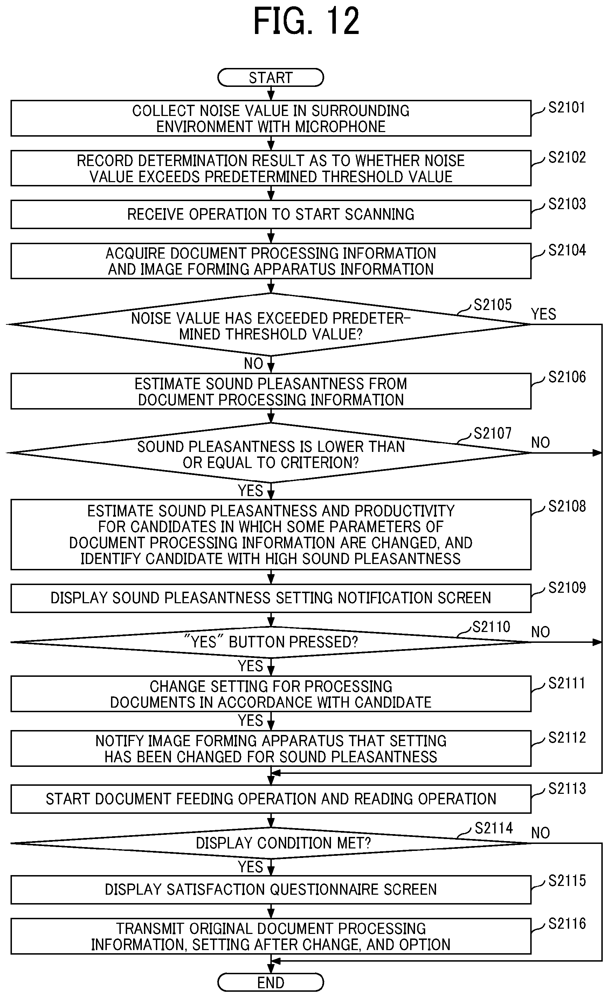

FIG. 12 is a flowchart illustrating an example of a procedure of document processing performed by the controller 904 of the ADF 51 according to a modification of the first embodiment. In S2101 to S2105, the controller 904 performs substantially the same processing as in S1901 to S1905 of the procedure of the process illustrated in FIG. 9, respectively.

After the processing in S2105, the controller 904 of the ADF 51 according to the modification does not perform the determination in S1906 in FIG. 9, and the estimation unit 1804 estimates the sound pleasantness from the document processing information in S2106. Specifically, the estimation unit 1804 inputs the document processing information to the trained model 1100, and receives information indicating the sound pleasantness and the productivity from the trained model 1100.

In S2107, the estimation unit 1804 determines whether the sound pleasantness indicated by the received information is lower than or equal to the criterion. The method of determining whether the sound pleasantness is lower than or equal to the criterion is as described above, and thus the description thereof is omitted. If the estimation unit 1804 determines that the sound pleasantness is higher than the criterion (S2107: NO), the controller 904 starts the document feeding operation and the reading operation of the ADF 51 based on the document processing information in S2113.

On the other hand, if the estimation unit 1804 determines that the sound pleasantness is lower than or equal to the criterion (S2107: YES), substantially the same processing as in S1909 and S1910 in FIG. 9 is performed in S2108 and S2109, respectively, so that the sound pleasantness setting notification screen is displayed. The sound pleasantness setting notification screen is the same as that in FIG. 10B.

In S2110, the setting changing unit 1805 determines whether the operation receiving unit 1807 has received pressing of the "Yes" button 2011. If the setting changing unit 1805 determines that pressing of a button other than the "Yes" button 2011, in other words, pressing of the "No" button 2012 is received (S2110: NO), the controller 904 recognizes that the productivity prioritizing mode is selected. In S2113, the controller 904 starts the document feeding operation and the reading operation by the ADF 51, based on the document processing information.

On the other hand, if the setting changing unit 1805 determines that pressing of the "Yes" button 2011 is received by the operation receiving unit 1807 (S2110: YES), the controller 904 recognizes that the pleasant sound mode is selected. In S2111, the setting changing unit 1805 changes the setting for processing documents in accordance with the identified candidate for the document processing information.

In S2112, the setting changing unit 1805 notifies the image forming apparatus 1 that the setting has been changed for the sound pleasantness. In response to receipt of the notification, the main device controller 901 of the image forming apparatus 1 changes the operation mode to the silent low-speed mode. In the silent low-speed mode, the image forming apparatus 1 sets the driving speeds of the driving mechanisms included in the image forming apparatus 1, for example, the sheet conveyance motor 192, the sheet feed motor 76, and the reading motor 77, to be lower than the driving speeds in the normal mode.

That is, even if the ADF 51 improves the sound pleasantness, people near the copier 100 are less likely to feel the improved sound pleasantness of the ADF 51 when the operation sound of the image forming apparatus 1 is loud. Accordingly, in the present modification, when the pleasant sound mode is selected in the ADF 51, the main device controller 901 controls the image forming apparatus 1 so that the operation sound is not so loud. This suppresses the unpleasantness caused in the people near the copier 100.

In S2113, the controller 904 starts the document feeding operation and the reading operation of the ADF 51, based on the changed setting.

In S2114, the display control unit 1806 determines whether a condition for displaying a questionnaire is met. The condition for displaying a questionnaire may be determined in accordance with each embodiment. If the display control unit 1806 determines that the condition for displaying a questionnaire is not met (S2114: NO), the process ends.

If the display control unit 1806 determines that the condition for displaying a questionnaire is met (S2114: YES), the display control unit 1806 displays a satisfaction questionnaire screen in S2115. The operation receiving unit 1807 receives an option for the satisfaction level from the satisfaction questionnaire screen via the operation device 902.

In S2116, the communication control unit 1802 transmits the original document processing information, the setting after the change, and the selected option of the satisfaction level associated with one another to an external apparatus (e.g., the design PC 909). The process then ends.

In the present embodiment and the modification described above, the control for improving the sound pleasantness of the ADF 51 is performed when the operation sound of the image forming apparatus 1 is small, so that the drowning out of the highly pleasant sound of the ADF 51 by the operation sound of the image forming apparatus 1 is suppressed. The copier 100 according to the present embodiment and the modification perform control such that the ADF 51 produces the highly pleasant sound when the operation sound of the image forming apparatus 1 is small, and thus can suppress unpleasantness caused in the nearby people.

Generation of the trained model 1100 for determining the sound pleasantness and the productivity will be described next. In the present embodiment, an example will be described in which different apparatuses execute a training phase and an inference phase.

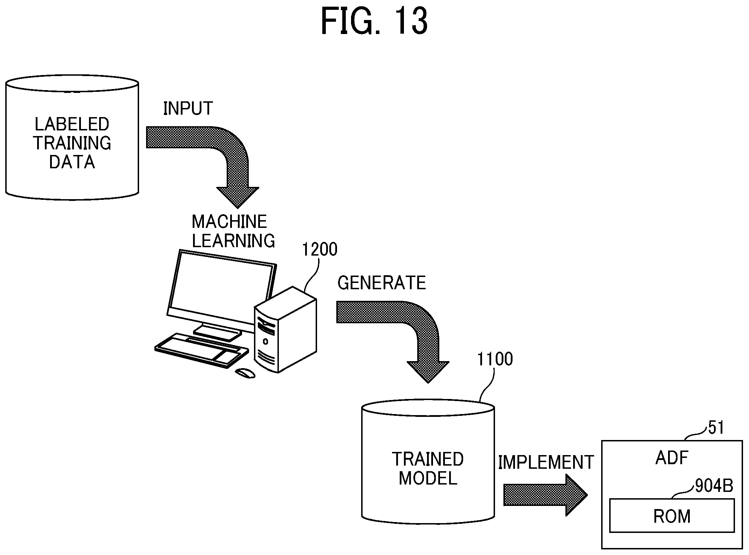

FIG. 13 is a diagram for describing the training phase in which an information processing apparatus 1200 generates the trained model 1100 and installs the trained model 1100 in the ADF 51.

As illustrated in FIG. 13, the trained model 1100 generated by the information processing apparatus 1200 is installed in the ADF 51. In the present embodiment, the example in which different apparatuses execute the training phase and the inference phase is described as an example. However, the configuration is not limited to the method in which different apparatuses execute the training phase and the inference phase, and a single apparatus may execute the training phase and the inference phase.

The information processing apparatus 1200 is an example of a trained model generation apparatus, and executes the training phase. The information processing apparatus 1200 may be a cloud server, a desktop personal computer (PC), or a mobile terminal apparatus such as a smartphone or tablet terminal.

The information processing apparatus 1200 performs machine learning based on labeled training datasets to generate the trained model 1100. Supervised learning based on the labeled training data is applied to a neural network, which serves as a base, so that the trained model 1100 is generated.

The labeled training data is information for use in generation of the trained model 1100. The labeled training data includes the setting for processing documents such as the document processing information, and information indicating the sound pleasantness and the productivity obtained when the setting is used. The labeled training data in the present embodiment further includes the information on the documents. In the present embodiment, by including the above-described information in the labeled training data, an improved accuracy of estimation can be implemented. Specific labeled training data will be described later.

The machine learning used in generation of the trained model 1100 may be, for example, machine learning using a neural network. In other examples, machine learning using a deep neural network (DNN), i.e., deep learning may be used. Examples of deep learning to be used include a convolutional neural network, a recurrent neural networks (RNN), and a long short term memory (LSTM).

The ADF 51 stores a configuration corresponding to the trained model 1100 generated by the information processing apparatus 1200 in the ROM 904B. The trained model 1100 is a type of computation algorithm, and is stored as a module of a part of the control program of the controller 904 of the ADF 51.

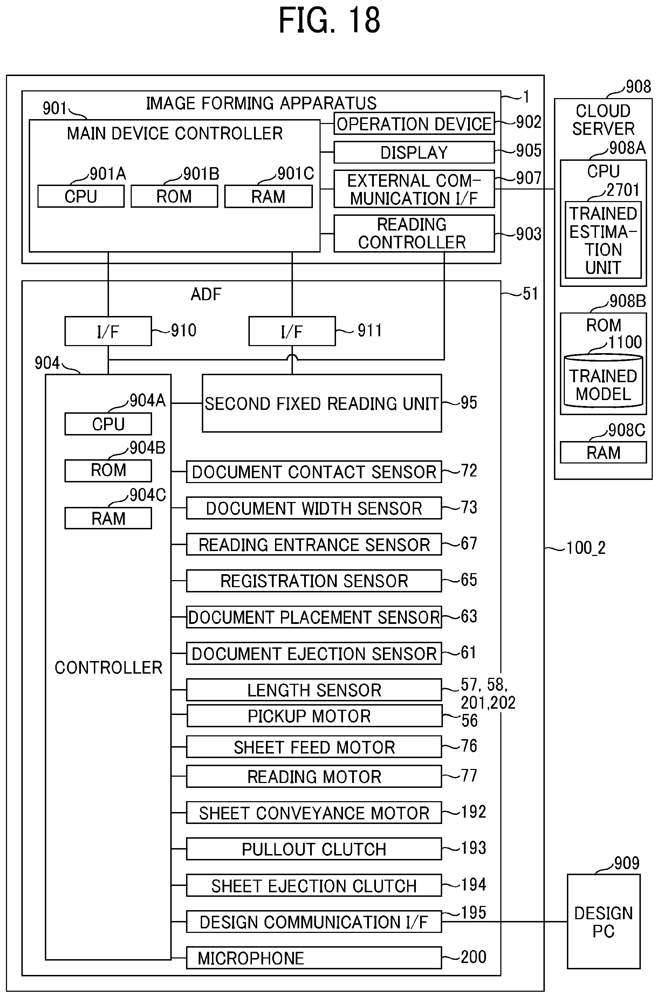

In the example in FIG. 13, the ROM 904B of the ADF 51 stores the trained model 1100. Alternatively, the trained model 1100 may be implemented in the main device controller 901 of the image forming apparatus 1, or an external apparatus such as a cloud server 908 (see FIG. 18), for example.

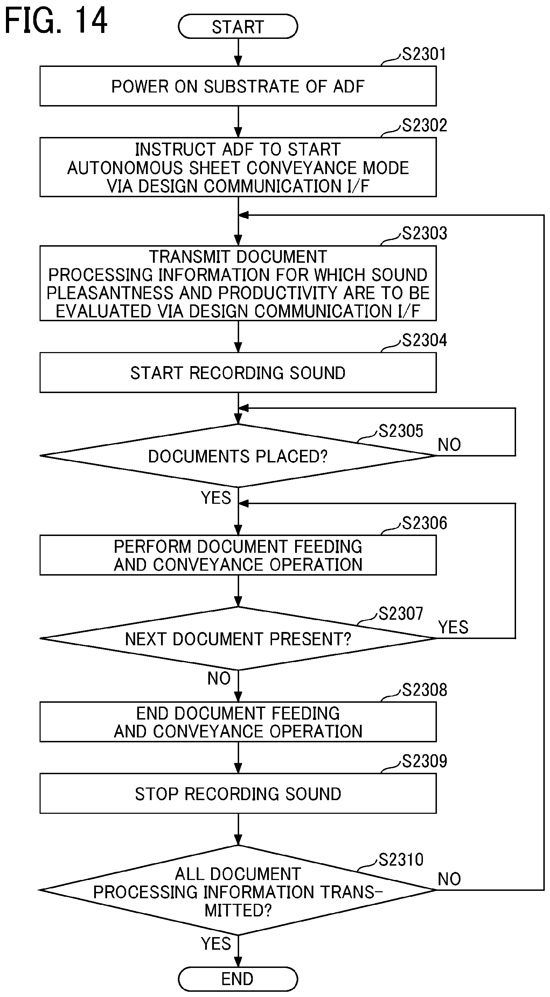

The labeled training data for use in generation of the trained model 1100 will be described next. FIG. 14 is a flowchart illustrating a procedure of collecting information for use in generation of labeled training data according to the present embodiment. The ADF 51 used for generating the labeled training data may be connected to the image forming apparatus 1, or may operate alone without being connected to the image forming apparatus 1. When the ADF 51 operates alone, the ADF 51 is to be supplied with power. Thus, the user beforehand makes a setting for supplying power to the ADF 51 by using a stabilized power supply.

The designer (user) performs an operation to power on a substrate of the ADF 51 in S2301. When being supplied with power, the ADF 51 is in a state of waiting for communication from the image forming apparatus 1.

In accordance with the operation of the designer (user), the design PC 909 issues an instruction to the ADF 51 via the design communication I/F 195 to start the autonomous sheet conveyance mode in S2302.

In the autonomous sheet conveyance mode, the ADF 51 is set to automatically start conveyance of documents at a timing when the document placement sensor 63 detects placement of the documents.

In the present embodiment, information for use in generation of the labeled training data is collected in the autonomous sheet conveyance mode. This makes the collection process easier. Since the main device of the image forming apparatus 1 does not operate, the information for use in generation of the labeled training data can be collected without receiving an influence of noise produced by the image forming apparatus 1.

In accordance with the operation by the designer (user), the design PC 909 transmits the document processing information indicating the settings for which the sound pleasantness and the productivity are to be evaluated to the ADF 51 via the design communication I/F 195 in S2303. The controller 904 of the ADF 51 makes the settings in accordance with the received document processing information. The document processing information includes, for example, the reading setting (single-sided or double-sided), the sheet feeding speed, the first contact amount, the pullout speed, the second contact amount, the document interval time, and whether to stop the pullout driven roller at the time of the second contact.

In accordance with an instruction from the design PC 909, the controller 904 of the ADF 51 starts recording sound with the microphone 200 in S2304 before documents are placed. The recorded sound data is used for determining the sound pleasantness of the sound produced by the ADF 51. To collect the noise, the designer (user) places documents on the document tray 53 of the ADF 51 in advance.

The controller 904 of the ADF 51 determines whether the documents are placed on the document tray 53, based on a signal from the document placement sensor 63 in S2305. If the controller 904 of the ADF 51 determines that no documents are placed on the document tray 53 (S2305: NO), the processing in S2305 is repeated until the documents are placed.

If the controller 904 of the ADF 51 determines that the documents are placed on the document tray 53 (S2305: YES), the controller 904 performs document feeding and conveyance operation in the autonomous sheet conveyance mode in S2306. The controller 904 of the ADF 51 determines whether a document is present on the document tray 53, based on the signal from the document placement sensor 63 each time one document is fed in S2307. If the controller 904 of the ADF 51 determines that a document is present on the document tray 53 (S2307: YES), the controller 904 performs the processing in S2306.

If the controller 904 of the ADF 51 determines that no document is present on the document tray 53 (S2307: NO), the controller 904 calculates the productivity and then ends the document feeding and conveyance operation in S2308. The productivity calculation method may be, for example, dividing the number of conveyed documents by a time from when the document feeding and conveyance operation starts to when the document feeding and conveyance operation ends.

The controller 904 of the ADF 51 stops recording the sound with the microphone 200 in S2309.

The design PC 909 determines whether the design PC 909 has transmitted all the document processing information for which the sound pleasantness and the productivity are to be evaluated to the ADF 51 in S2310. If the design PC 909 determines that the design PC 909 has not transmitted all the document processing information for which the sound pleasantness and the productivity are to be evaluated to the ADF 51 (S2310: NO), the design PC 909 performs the processing from S2303 again.

If the design PC 909 determines that the design PC 909 has transmitted all the document processing information for which the sound pleasantness and the productivity are to be evaluated to the ADF 51 (S2310: YES), the process ends.

The design PC 909 performs the above-described process, and thus successfully acquires, for each document processing information, information indicating the productivity and the sound data of an operation performed in accordance with the document processing information.

The design PC 909 also allows various persons to hear the sound data, and collects information indicating the sound pleasantness level ranging from "1" to "10" via an operation device or the like from the persons. Based on the sound pleasantness levels input by the multiple persons, the design PC 909 calculates the "sound pleasantness level average value (estimated value)" and the "sound pleasantness level standard deviation (estimated value)".

In accordance with an operation by an operator or the like, a given computer such as the design PC 909 associates the productivity, the "sound pleasantness level average value (estimated value)", and the "sound pleasantness level standard deviation (estimated value)" with one another for each document processing information for which the sound pleasantness and the productivity are to be evaluated, and generates labeled training data.

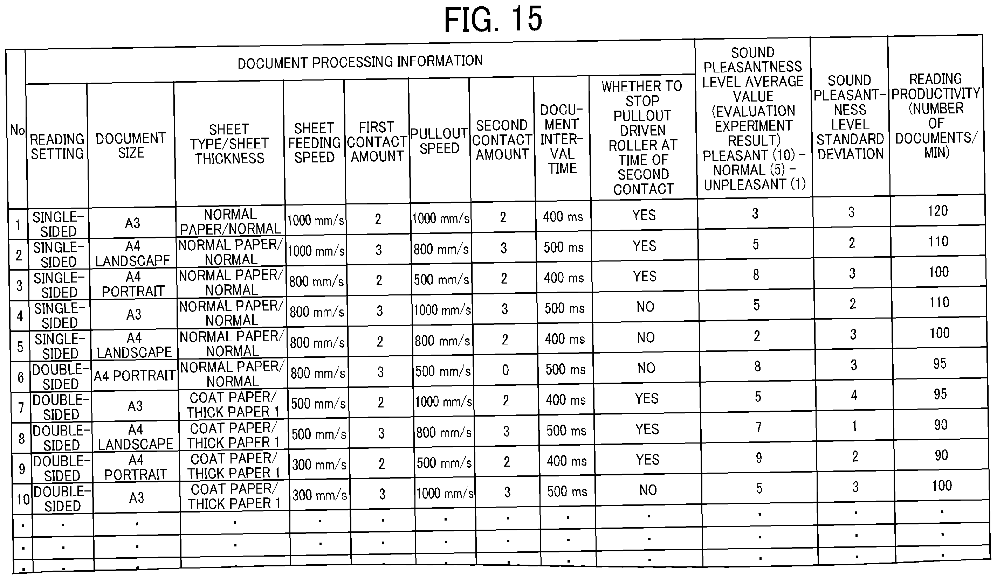

FIG. 15 is a diagram illustrating a structure of the labeled training data according to the present embodiment. As illustrated in FIG. 15, the labeled training data associates, for each document processing information, the sound pleasantness level average value, the sound pleasantness level standard deviation, and the (reading) productivity with one another. As in the example described above, the document processing information includes, for example, the reading setting (single-sided or double-sided), the sheet feeding speed, the first contact amount, the pullout speed, the second contact amount, the document interval time, and whether to stop the pullout driven roller at the time of the second contact. Based on the labeled training data, the information processing apparatus 1200 generates the trained model 1100.

In the present embodiment, the document processing information includes information such as the document size and the sheet type/sheet thickness in addition to the information related to the operation of the ADF 51. In the present embodiment, the document processing information further including the information on documents can improve the accuracy of estimation. The present embodiment presents an example of the document processing information. In another embodiment, the document processing information does not include the information on documents. When the estimation unit 1804 uses the information on documents in the estimation using the trained model 1100, the user may input the document size and the sheet type/sheet thickness. The use of the information on documents as input data in the estimation performed by the estimation unit 1804 can implement an improved estimation accuracy of the sound pleasantness and the productivity.

As described above, the labeled training data includes the document processing information, which is the input data, and the sound pleasantness (i.e., the "sound pleasantness level average value" and the "sound pleasantness level standard deviation") and the productivity (i.e., "reading productivity"), which are the output data.

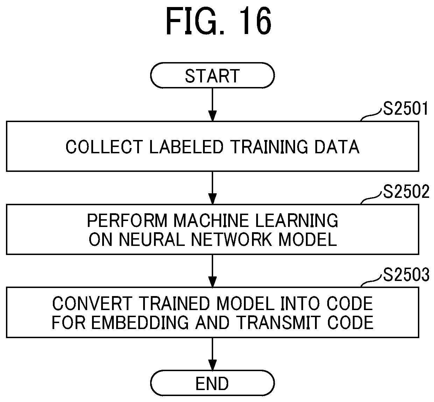

FIG. 16 is a flowchart illustrating a trained model generation procedure in the information processing apparatus 1200.

The flowchart illustrated in FIG. 16 presents an example of a process up to generation of a trained model by deep learning (DL) using a neural network (NN). In the present embodiment, generation of the trained model is not limited to the example of using deep learning (DL), and a deep neural network (DNN) may be used. Examples of deep learning to be used include a convolutional neural network, an RNN, and an LSTM.

The information processing apparatus 1200 collects (acquires) labeled training data generated by another computer or the like in S2501.

The information processing apparatus 1200 performs machine learning on a neural network using the collected labeled training data to generate a trained model in S2502. The trained model can be generated using a general artificial intelligence (AI) framework. As the AI framework, for example, TensorFlow^{®}, MATLAB^{®}, PyTorch^{®}, or ONNX^{®} can be applied.

The information processing apparatus 1200 converts the trained model generated by machine learning into code for embedding in the controller 904 of the ADF 51, and transmits the code to the ADF 51 in S2503. The trained model generated by the AI framework often has a format not processable by the CPU 904A of the ADF 51. Accordingly, the information processing apparatus 1200 converts the trained model 1100 into code (e.g., in C language) for embedding and outputs the code to the controller 904 of the ADF 51. The controller 904 of the ADF 51 stores the trained model 1100 in the ROM 904B, based on the received code for embedding.

The combinations of the parameters included in the document processing information are countless. Thus, when the designer of the ADF 51 performs the conveyance operation under various conditions and evaluates the sound pleasantness using sound produced in the conveyance operation in the design phase of the ADF 51, this evaluation takes a lot of man-hours and costs and may cause combinations insufficiently examined.

In contrast, the controller 904 performs inference using the trained model 1100, and thus can estimate the sound pleasantness and the productivity with a certain accuracy for unknown combinations not included in the labeled training data.

For example, depending on combinations of multiple operations, an increase or decrease in the sound pleasantness may occur, which is not expected by the designer from the document processing information that is based on combinations of specific parameters and is included in the labeled training data. The information processing apparatus 1200 performs machine learning based on the labeled training data. Thus, the use of the trained model 1100 that has undergone the machine learning allows the controller 904 to estimate the increase or decrease in the sound pleasantness, which is not expected by the designer, even when the operation is performed in accordance with the document processing information not included in the labeled training data.

In a specific example, depending on a combination of multiple parameters included in the document processing information, the trained model 1100 may predict superimposition of sound produced by a contact to a roller with sound produced by a contact to another roller. Depending on a combination of multiple parameters included in the document processing information, the trained model 1100 may predict that sound produced at the time of contacts to rollers has a rhythmical pattern that makes a person hearing the sound comfortable although such a rhythmical pattern is not designed by the designer.

In the present embodiment, the example has been described which assumes that the information processing apparatus 1200 generates the trained model 1100 and the generated trained model 1100 is embedded to all the produced ADFs 51. However, the present embodiment presents merely an example. In another example, in an assembly phase of the ADF 51 at the factory, each time the ADF 51 is assembled, the assembled ADF 51 may be used to acquire the labeled training data and generate the trained model 1100, and the completed trained model 1100 may be embedded to the ADF 51. In this case, since the trained model 1100 is optimized for the ADF 51, the trained model 1100 can implement an improved accuracy of estimation.

As described above, the controller 904 of the ADF 51 according to the present embodiment uses the trained model 1100 to implement an improved accuracy of estimation of the sound pleasantness.

### Second Embodiment

In the embodiment described above, the case has been described where the controller 904 of the ADF 51 uses the trained model 1100 to execute the estimation phase. However, the configuration that executes the estimation phase is not limited to the controller 904 of the ADF 51. In a second embodiment, a case in which an image forming apparatus executes the estimation phase will be described.

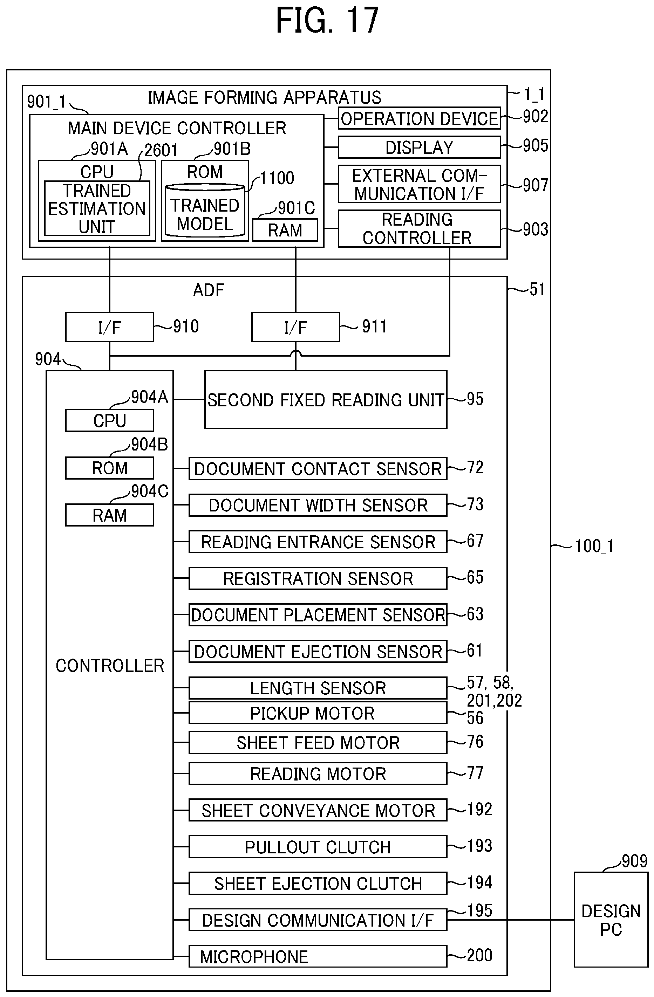

FIG. 17 is a diagram illustrating an example of a configuration of a copier 100_1 according to the second embodiment. Components of the copier 100_1 illustrated in FIG. 17 that are the same as those of the copier 100 according to the first embodiment are denoted by the same reference signs, and the description thereof is omitted.

A main device controller 901_1 of an image forming apparatus 1_1 illustrated FIG. 17 stores the trained model 1100 in the ROM 901B.

The main device controller 901_1 of the image forming apparatus 1_1 executes a program stored in the ROM 901B to implement a trained estimation unit 2601.

The trained estimation unit 2601 implements the estimation phase using the trained model 1100.

As in the embodiment described above, the controller 904 of the ADF (document processing apparatus) 51 implements the acquisition unit 1801, the communication control unit 1802, the determination unit 1803, the estimation unit 1804, the setting changing unit 1805, the display control unit 1806, and the operation receiving unit 1807.

However, the estimation unit 1804 of the ADF (document processing apparatus) 51 does not perform estimation using the trained model in the ADF 51 but outputs the document processing information to the main device controller 901_1 of the image forming apparatus 1.

The trained estimation unit 2601 of the main device controller 901_1 supplies the input document processing information to the trained model 1100, and thus receives the "sound pleasantness level average value (estimated value)", the "sound pleasantness level standard deviation (estimated value)", and the "number of documents readable per time (estimated value)" from the trained model 1100.

The trained estimation unit 2601 then outputs the "sound pleasantness level average value (estimated value)", the "sound pleasantness level standard deviation (estimated value)", and the "number of documents readable per time (estimated value)" to the estimation unit 1804 of the ADF (document processing apparatus) 51.

The estimation unit 1804 uses the input "sound pleasantness level average value (estimated value)" and "sound pleasantness level standard deviation (estimated value)" to determine whether the sound pleasantness is lower than or equal to a criterion.

If the estimation unit 1804 determines that the sound pleasantness is higher than the criterion, the controller 904 starts the document feeding operation and the reading operation of the ADF 51 based on the document processing information.

If the estimation unit 1804 determines that the sound pleasantness is lower than or equal to the criterion, the estimation unit 1804 outputs multiple candidates for the document processing information in which some of the parameters that do not affect the reading function are changed, to the main device controller 901_1 of the image forming apparatus 1_1. The trained estimation unit 2601 again uses the trained model 1100 to perform estimation using the input candidates for the document processing information, and outputs the estimation result to the estimation unit 1804. Since the subsequent processing is the same as that described in the above embodiment, the description thereof is omitted.

In the present embodiment, the estimation phase is executed using the CPU 901A of the image forming apparatus 1_1. The CPU 901A of the image forming apparatus 1_1 has higher performance than the CPU 904A of the ADF 51, and thus can reduce the processing time in the estimation phase. The CPU 904A of the ADF 51 can have reduced performance, so that the reduced cost can be implemented.

### Third Embodiment

In the embodiments described above, the case has been described where the component in the copier uses the trained model 1100 to execute the estimation phase. However, the configuration that executes the estimation phase is not limited to the component in the copier. In a third embodiment, an example will be described in which an external apparatus that can communicate with the copier executes the estimation phase.

FIG. 18 is a diagram illustrating an example of configurations of a copier 100_2 and the cloud server 908 according to the third embodiment. Components of the copier 100_2 illustrated in FIG. 18 that are the same as those of the copier 100_1 according to the second embodiment are denoted by the same reference signs, and the description thereof is omitted. In the example illustrated in FIG. 18, the cloud server 908 is provided as the external apparatus that can communicate with the copier 100_2. In the present embodiment, the apparatus that executes the estimation phase is not limited to the cloud server 908, and may be any external apparatus of the copier 100_2.

The cloud server 908 illustrated in FIG. 18 has a configuration of a computer, which includes a CPU 908A, a ROM 908B, and a RAM 908C. The cloud server 908 stores the trained model 1100 in the ROM 908B.

The CPU 908A of the cloud server 908 executes a program stored in the ROM 908B to implement a trained estimation unit 2701.

The trained estimation unit 2701 implements the estimation phase using the trained model 1100.

The estimation unit 1804 of the ADF 51 transmits the document processing information to the cloud server 908, and receives an estimation result obtained by the trained model 1100. Since the same procedure as that in the second embodiment is used as the specific processing procedure, the description thereof is omitted.

FIG. 18 illustrates an example in which one copier 100_2 is connected to the cloud server 908. However, multiple copiers 100_2 may be connected to the cloud server 908. The cloud server 908 estimates the sound pleasantness and the productivity, based on the document processing information transmitted from each of the multiple copiers 100_2.

To estimate the sound pleasantness and the productivity for each of the multiple copiers 100_2, machine learning is performed on the trained model 1100 of the cloud server 908 by using labeled training data based on each of the multiple copiers 100_2.

When different types of the ADF 51 are installed in the multiple copiers 100_2, the designer acquires sound data for each type of the ADF 51 and prepares labeled training data using the sound data. The information processing apparatus 1200 (see FIG. 13) performs machine learning using the labeled training data to generate the trained model 1100. Thus, the trained model 1100 of the cloud server 908 can estimate the sound pleasantness and the productivity for each of the multiple copiers 100_2.

As in the first embodiment, the information processing apparatus 1200 collects the original document processing information, the setting after the change, and the option indicating the sound pleasantness input by the user from each of the multiple copiers 100_2 connectable to the cloud server 908. The information processing apparatus 1200 generates the labeled training data based on the collected information, and performs additional learning on the trained model 1100 by using the generated labeled training data. In the present embodiment, additional learning based on the information collected from the multiple copiers 100_2 can implement an improved accuracy of estimation.

The labeled training data according to the present embodiment may include information for identifying the type of the copier 100_2 or the type of the ADF 51. In this case, the cloud server 908 inputs the document processing information and the identification information to the trained model 1100, and receives the sound pleasantness and the productivity from the trained model 1100.

The cloud server 908 performs the process described above, so that estimation of the sound pleasantness and the productivity according to the individual copiers 100_2 can be implemented even when various copiers 100_2 are connected to the cloud server 908.

The CPU 904A of the ADF 51 and the CPU 901A of the image forming apparatus 1, which are included in the copier 100_2, can have reduced performance, so that the reduced cost can be implemented in the present embodiment.

### Modifications

In the embodiments described above, the examples have been described in which a device such as the CPU 904A uses the trained model 1100 to estimate the sound pleasantness and the productivity from the document processing information. However, the embodiments described above do not limit the estimation to the estimation using the trained model 1100.

For example, a method may be used in which a processing apparatus holds table information in which the document processing information is associated with the sound pleasantness and the productivity, and estimates the sound pleasantness and the productivity based on the document processing information with reference to the correspondence relationship in the table information.

In the embodiments and modifications described above, the sound pleasantness which a person feels for sound produced in conveyance or reading of a document in the case where the document is conveyed or read by the ADF is estimated. This allows control or notification to be performed in consideration of the sound pleasantness, and thus suppress unpleasantness caused in the nearby people. Thus, the copier according to the embodiments and the modifications implements an improved comfort in the surrounding environment.

Any one of the above-described operations may be performed in various other ways, for example, in an order different from the one described above.

According to one aspect, a trained model generation apparatus includes a training unit. The training unit performs machine learning using labeled training data to generate a trained model. The labeled training data is data in which processing information is associated with sound pleasantness. The processing information includes at least one of a setting for conveying a document by a conveyer that conveys a document from a tray of a document processing apparatus and a setting for reading the document by a reading unit of the document processing apparatus. The sound pleasantness is felt by a person for sound produced in conveyance or reading of the document.

According to one aspect, in the trained model generation apparatus described above, the training unit further associates, as the labeled training data for use in generation of the trained model, information on the document placed on the tray of the document processing apparatus.

According to one aspect, in the trained model generation apparatus described above, the training unit includes, in the labeled training data for use in generation of the trained model, the processing information collected when the document is autonomously fed and conveyed using an autonomous sheet conveyance mode of the document processing apparatus.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A document processing apparatus (51) comprising:
a tray (53) on which a document is to be placed;
a conveyer (B, C, D, E, F, G, H) configured to convey the document from the tray (53);
a reading unit (151, 95) configured to read an image of the document while the document is conveyed by the conveyer (B, C, D, E, F, G, H);
an acquisition unit (1801) configured to acquire processing information including at least one of a setting for conveying the document by the conveyer (B, C, D, E, F, G, H) and a setting for reading the document by the reading unit (151, 95); and
an estimation unit (1804) configured to estimate, based on the processing information acquired by the acquisition unit (1801), sound pleasantness which a person feels for sound produced in conveyance or reading of the document in a case where the document is conveyed or read.

2. The document processing apparatus (51) according to claim 1, wherein the estimation unit (1804) is configured to, when inputting the processing information to a trained model, receive an estimation result of the sound pleasantness from the trained model, the trained model being a model on which machine learning has been performed to estimate the sound pleasantness in the document processing apparatus (51).

3. The document processing apparatus (51) according to claim 1, wherein the processing information includes the setting for conveying the document, the document processing apparatus (51) further comprising:
a changing unit (1805) configured to change, based on an estimation result of the sound pleasantness, the setting for conveying the document.

4. The document processing apparatus (51) according to claim 2, wherein the processing information acquired by the acquisition unit (1801) further includes information on the document placed on the tray (53).

5. The document processing apparatus (51) according to claim 2, wherein
the trained model estimates a number of documents processable per predetermined time by the conveyer (B, C, D, E, F, G, H),
the estimation unit (1804) is configured to receive the number of documents processable per predetermined time from the trained model, and
the document processing apparatus (51) further comprises:
a changing unit (1805) configured to change the setting for conveying the document, based on the number of documents processable per predetermined time and the estimation result of the sound pleasantness.

6. The document processing apparatus (51) according to claim 3, wherein the processing information includes the setting for conveying the document, and the document processing apparatus (51) further comprises:
an output control unit (1806) configured to output a notification related to a change in the setting for conveying the document, the notification being based on the estimation result of the sound pleasantness; and
an operation receiving unit (1807) configured to receive an operation related to the change in the setting, wherein
the changing unit (1805) is configured to change the setting for conveying the document in accordance with the operation received by the operation receiving unit (1807).

7. The document processing apparatus (51) according to claim 3, wherein the changing unit (1805) is configured to enable switching of a mode between
a first mode that indicates the setting for conveying the document by the conveyer (B, C, D, E, F, G, H) based on a number of documents processable per predetermined time and the estimation result of the sound pleasantness, and
a second mode indicating a setting for making the sound pleasantness higher than in the first mode to make the number of documents processable per predetermined time lower than in the first mode.

8. The document processing apparatus (51) according to claim 3, further comprising:
a sound collection device (200) configured collect sound around the document processing apparatus (51); and
a determination unit (1803) configured to determine whether to change the setting for conveying the document, based on the sound collected by the sound collection device (200).

9. The document processing apparatus (51) according to any one of claims 5 to 8, further comprising:
a communication control unit (1802) configured to transmit the setting before a change and a setting after the change when the setting for conveying the document is changed by the changing unit (1805).

10. The document processing apparatus (51) according to claim 9, further comprising:
an operation receiving unit (1807) configured to receive information indicating a degree of satisfaction with the sound produced by the document processing apparatus (51) during conveyance of the document by the conveyer (B, C, D, E, F, G, H), wherein
the communication control unit (1802) is configured to further transmit the degree of satisfaction that is input.

11. The document processing apparatus (51) according to claim 1, further comprising:
a communication device (910) configured to communicate with an external apparatus, wherein
the estimation unit (1804) is configured to transmit the processing information acquired by the acquisition unit (1801) to the external apparatus via the communication device (910), and receive, from the external apparatus, an estimation result of the sound pleasantness which a person feels for the sound produced in conveyance or reading of the document.

12. An image forming apparatus (1_1) comprising:
an acquisition unit (901_1, 2601) configured to:
connect to a document processing apparatus via an interface to enable communication with the document processing apparatus, the document processing apparatus including a tray on which a document is to be placed, a conveyer to convey the document from the tray, and a reading unit to read an image on the document while the document is conveyed by the conveyer; and
acquire processing information including at least one of a setting for conveying the document by the conveyer and a setting for reading the document by the reading unit; and
an estimation unit (2601, 1100) configured to estimate, based on the processing information acquired by the acquisition unit (901_1, 2601), sound pleasantness which a person feels for sound produced in conveyance or reading of the document in a case where the document is conveyed or read.

13. An image forming system (100) comprising:
a document processing apparatus (51); and
an image forming apparatus (1),
the document processing apparatus (51) including:
a tray (53) on which a document is to be placed;
a conveyer (B, C, D, E, F, G, H) configured to convey the document from the tray (53);
a reading unit (151, 95) configured to read an image of the document while the document is conveyed by the conveyer (B, C, D, E, F, G, H); and
an interface (910, 911) configured to connect to the image forming apparatus to enable communication with the image forming apparatus, and
the image forming apparatus (1) including a driving mechanism (192, 76, 77) configured to perform driving to form an image, wherein
the document processing apparatus (51) further includes:
an acquisition unit (1801) configured to acquire processing information including at least one of a setting for conveying the document by the conveyer (B, C, D, E, F, G, H) and a setting for reading the document by the reading unit (151, 95);
an estimation unit (1804) configured to estimate, based on the processing information acquired by the acquisition unit (1801), sound pleasantness which a person feels for sound produced in conveyance or reading of the document in a case where the document is conveyed or read; and
a communication control unit (1802) configured to transmit information based on an estimation result of the sound pleasantness to the image forming apparatus (1), and
the image forming apparatus (1) is configured to change control of the driving mechanism (192, 76, 77), based on the received information.
